# EUROPEAN PATENT APPLICATION

(11) **EP 2 128 400 A1**
(43) Date of publication of application: **02.12.2009**
(21) Application number: 08720890.6
(22) Date of filing: 20.02.2008
(51) Int. Cl.: F02B 29/08, F02B 27/00, F02D 9/02, F02D 41/02

(54) **INTERNAL COMBUSTION ENGINE**

(30) Priority: 20.02.2007 JP 2007039572; 29.03.2007 JP 2007087264
(71) Applicant: Toyota Jidosha Kabushiki Kaisha, Toyota-shi Aichi 471-8571 (JP)
(72) Inventor: ITO, Yasushi, Toyota-shi Aichi 471-8571 (JP); KATSUMATA, Shouji, Toyota-shi Aichi 471-8571 (JP); YOEDA, Keiji, Toyota-shi Aichi 471-8571 (JP); NISHIDA, Hideyuki, Toyota-shi Aichi 471-8571 (JP); TANNO, Shiro, Toyota-shi Aichi 471-8571 (JP)
(74) Representative: TBK-Patent
(86) International application number: PCT/JP2008/053341
(87) International publication number: WO 2008/108234

(57) **Abstract**

According to an internal combustion engine (10) in the present invention, in an internal combustion engine provided with a plurality of cylinders and an intake control valve provided in an intake passage and used for impulse charge, intake charge efficiencies of the respective cylinders are made substantially equal between the cylinders. Intake passages (P11, P12, P13, and P14) each having a passage length contributing to generation of an air column vibration is provided respectively to a plurality of cylinders (16), and an intake control valve (56) for impulse charge is provided individually or commonly in these intake passages (P11, P12, P13, and P14), wherein an opening/closing timing of the intake control valve (56) is set to correspond to a passage length (L11, L12, L13 or L14) of each of the intake passages (P11, P12, P13, and P14). Specially the passage length (L11, L12, L13 or L14) of each of the intake passages (P11, P12, P13, and P14) is a length from a position of an intake valve in each cylinder (16) to a downstream end of a surge tank (22).

## Description

### TECHNICAL FIELD

The present invention relates to an internal combustion engine with a plurality of cylinders and an intake control valve disposed in an intake passage to be used for impulse charge.

### BACKGROUND ART

Various kinds of means and methods are conventionally proposed for improving an intake charge efficiency into each cylinder and one example thereof is disclosed in Japanese Patent Laid-Open No. H7-139360 (1995) (Document 1) . An intake apparatus for a V-type engine in Document 1 is so configured that a first intake supply passage for supplying intake air into cylinders in one bank is connected to a second intake supply passage for supplying intake air into cylinders in the other bank through respective ends of both the passages to provide a resonance circular passage formed circularly for a pressure wave propagating from each intake port to go around. Thus this apparatus is designed to generate resonance of the pressure wave in the resonance circular passage and enhance an intake charge efficiency of each cylinder by means of this resonance effect.

In addition, an intake apparatus for an internal combustion engine disclosed in Japanese Patent Laid-Open No. H9-250350(1997) (Document 2) includes a box-type body casing attached on a side surface in the intake port side of a cylinder head for a multi-cylinder internal combustion engine in such a manner as to extend in a cylinder-line direction and an intake pipe provided to each intake port so that the intake pipe has one end opened to an inside of the body casing and the other end communicated with the intake port. Further, it is configured in such a manner that a partition plate is provided approximately in the middle of the plural intake pipes for mutual connection thereof and a space in the body casing upstream of the partition plate where a downstream end is defined by this partition plate acts as a surge tank. Therefore, the apparatus has the configuration in such a manner that an intake branch pipe corresponding to each cylinder is directly connected to a surge-tank equivalent portion. In the apparatus, such each intake pipe is formed not by casting but may be formed of a metallic pipe or a synthetic resin for reducing a flow resistance of intake air in each intake pipe in terms of an improvement of an intake charge efficiency into each cylinder.

An intake apparatus for a multi-cylinder engine disclosed in Japanese Patent No. H7-26539 (1995) (Document 3) is provided with a common intake passage downstream of a surge tank and a branch intake passage branching from one location of the common intake passage into each cylinder. A length of an intake passage formed by the common intake passage and the branch intake passage between the surge tank and the intake port is set as a length to the extent that a supercharge effect can be obtained due to intake inertia in a rotational region except for a high speed region. Additionally, a length of the branch intake passage communicating between the respective intake ports of cylinders in which ignitions are made in sequential order is set as a length to the extent that a supercharge effect can be obtained by applying a high-pressure wave generated by opening/closing the intake port at a high speed to the next cylinder at a later stage of an intake stroke. In this way, an improvement of the intake charge efficiency into each cylinder is designed to be made.

On the other hand, it is known that an intake air quantity into a cylinder varies by changing a lift amount or the like of an intake valve through a variable valve operating mechanism. Therefore, in an internal combustion engine provided with such a variable valve operating mechanism, it is not preferable that a fuel injection quantity is determined without variation, and, for making an air-fuel ratio of a mixture in the cylinder close to a target air-fuel ratio, such as a theoretical air-fuel ratio, it is desired to set a fuel injection quantity in consideration thereof as needed. For example, an apparatus described in Japanese Patent Laid-Open No. 2002-180894 (Document 4) calculates an in-cylinder pressure at an intake bottom dead center based upon a valve lift amount, an operational angle and an opening/closing timing of an intake valve, a pressure in an intake pipe and an engine rotational speed, and further makes it possible to calculate and set a fuel injection quantity based upon the in-cylinder pressure at the intake bottom dead center.

Incidentally, there is conventionally proposed a technology in which an intake control valve is provided in an intake passage upstream of an intake valve to control intake air into an internal combustion engine and one example thereof is disclosed in Japanese Patent Laid-Open No. 2000-248946 (Document 5). The intake control valve in Document 5 is continuously held at an open position for opening an intake passage when supercharge is not desired. On the other hand, when the supercharge is desired, the intake control valve is activated to a closed position for closing the intake passage at an initial stage of the intake stroke during engine operating, and is rapidly activated in an open direction for opening the intake passage when a pressure difference between the intake passage upstream of the intake control valve and the intake passage downstream thereof becomes large. In this way, the apparatus in Document 5 is designed to strongly accelerate air in the intake passage by negative pressure downstream of the intake control valve to improve an intake charge efficiency. The supercharge performed in this way is called impulse charge.

In general, in an internal combustion engine, an intake air quantity into each cylinder is estimated based upon a detection value of an air flow quantity detected using an air flow meter or a detection value of an intake pressure sensor and a fuel injection control or the like is performed using this estimated value. However, in a case of adopting the above-mentioned intake control valve, since the intake air quantity into each cylinder varies for each intake cycle depending on an operational timing of the intake control valve, it is difficult to accurately measure the intake air quantity into each cylinder with such a general method.

Therefore, an apparatus created for solving this problem is disclosed in Japanese Patent Laid-Open No. 2006-283639 (Document 6). According to the apparatus in Document 6, in an internal combustion engine where one intake control valve mentioned above is provided for each branch pipe of each cylinder, an intake air quantity into each cylinder at the operating of the intake control valve can be more appropriately estimated, and a given calculation is performed based upon three parameters of an opening timing of the intake control valve, a closing timing or an opening period thereof and a pressure in the intake passage downstream of the intake control valve at the opening timing thereof to estimate an air quantity flowing into the cylinder when the intake control valve opens. In this apparatus, a fuel injection quantity or a fuel injection timing can be determined based upon the air quantity estimated in this way.

Further, an example of correcting a fuel injection quantity during the operating of an intake control valve in an internal combustion engine where the intake control valve is likewise provided in an intake passage branching for each cylinder and one or more fuel injectors are arranged at a position of the intake passage away from the cylinder, is disclosed in Japanese Patent Laid-Open No. 2005-180182 (Document 7). The configuration of the apparatus in Document 7 is created to correct a fuel injection quantity based upon a quantity (attachment quantity) of fuel attached on an inner wall surface of an intake pipe or an intake port, or floating in the intake pipe without being aspired, during the operating of the intake control valve.

### DISCLOSURE OF THE INVENTION

An internal combustion engine used in most of vehicles is a multi-cylinder type internal combustion engine, and a length of the intake passage therein generally differs between cylinders. For example, in the internal combustion engine where a length of an intake passage communicated with each cylinder differs one after another, the above intake control valves are provided and, for performing the impulse charge, the intake control valves are controlled in the same way in regard to all the cylinders. In this case, a difference in an intake charge efficiency (or intake air quantity) occurs between cylinders as a result. This means that a difference in torque produced for each cylinder occurs between cylinders, which is not desirable.

Therefore, the present invention is made in view of the foregoing problem and an object of the present invention lies in a point where in an internal combustion engine provided with a plurality of cylinders and an intake control valve provided in an intake passage to be used for impulse charge, intake charge efficiencies of the respective cylinders are made substantially equal between the cylinders.

For achieving the above object, an internal combustion engine according to the present invention is characterized in that intake passages are provided to a plurality of cylinders, respectively, each of the intake passages having a passage length contributing to generation of an air column vibration, wherein an intake control valve usable for impulse charge is provided individually or commonly in these intake passages, and an opening/closing timing of the intake control valve is set to correspond to the passage length of each of the intake passages.

According to the above configuration, since the opening/closing timing of the intake control valve is set to correspond to the passage length of each of the intake passage, even if the passage length of the intake passage differs between the cylinders, the intake charge efficiency of each cylinder can be substantially equal between the cylinders.

Specifically the passage length of each of the intake passages is preferably a length from a position of an intake valve for each of the cylinders to a downstream end of a surge tank. In this case, an upstream end of each intake passage is opened to the surge tank, and when the intake valve of the corresponding cylinder opens, the downstream end of each intake passage is opened to the cylinder. Therefore, a negative pressure wave generated by opening the intake control valve at an opening timing for impulse charge later than the opening timing of the intake valve is transmitted up in the upstream side in the intake passage and is converted into a positive pressure wave at an upstream end of the intake passage which is opened to the surge tank, wherein the positive pressure wave can arrive at the cylinder while maintaining a desired pressure level. The air column vibration generated in this way enables performance of the impulse charge.

Further, in the above internal combustion engine, a cross sectional area of any location in the intake passage may be substantially equal. In this way, the damping of the air column vibration generated in the intake passage at the time of performing the impulse charge can be restricted.

In the above internal combustion engine, each of the intake passages may include a common intake passage in common with the other intake passage and an individual intake passage in regard to a single cylinder corresponding thereto, wherein the plurality of the cylinders may be divided into one or more groups, and the single common intake passage in regard to one group may communicate with the surge tank. In this way, the plurality of intake passages to the plurality of cylinders in the one group are put together to be communicated with the surge tank. Specifically the plurality of cylinders may be divided into groups, each of which consists of cylinders having discontinuous timings of the intake stroke. In this way, an influence of the air column vibration in one arbitrary cylinder on intake air in the other cylinder is reduced. Otherwise the plurality of cylinders may be divided into groups, each of which consists of adjacent cylinders. In this way, the passage length of the intake passage to each cylinder can be shortened.

In addition, in the various kinds of the internal combustion engines, the intake control valve may be provided in the common intake passage. In this way, it is possible to reduce the number of the intake control valves to cut down on costs.

Otherwise in the various kinds of the internal combustion engines, the intake control valve may be provided in the individual intake passage. In this way, a volume of the passage downstream of the intake control valve in each intake passage can be small. Therefore, the air column vibration in regard to each cylinder can be more effectively generated at the time of performing the impulse charge. In this case, the intake control valve is preferably provided in an intake port. In this way, it is possible to increase the air column vibration, in other words, a compelling force of intake pulsations at the time of performing the impulse charge.

Further, in the various kinds of the internal combustion engines, the intake control valve may be provided in a boundary portion between the common intake passage and the individual intake passage. In this way, one intake control valve can be commonly used in regard to the plurality of the cylinders. When the intake control valve is provided in the boundary portion between the common intake passage and the individual intake passage, the intake control valve can be provided in a branch portion of the boundary portion or an intermediate branch passage of the boundary portion. Particularly, in a case where the intake control valve is provided in the branch portion of the boundary portion, the intake control valve may be configured in such a manner that when the intake passage to one cylinder is open, the intake passage to the other cylinder is blocked.

In the various kinds of the internal combustion engines, the individual intake passage may be formed in a cylinder head and a downstream end of the common intake passage may be formed in the cylinder head. In this way, it is possible to perform reduction of the numbers of components, elimination of fastening mechanisms for respective components, and reduction of noises generated due to air column vibrations.

Further, in the various kinds of the internal combustion engines, the plurality of the intake control valves may be provided, wherein the intake control valve provided in the intake passage to the cylinder which is during an intake stroke is controlled to be opened and closed, and the other intake control valve provided in the intake passage to the cylinder which is not during the intake stroke is controlled to be closed. In this way, it is possible to more accurately generate the air column vibration in the intake passage to the cylinder which is during the intake stroke.

Each of the various kinds of the internal combustion engines may be provided with an intake control valve controller for controlling the intake control valve according to an operating state, wherein when the operating state is in an impulse charge operating region, the intake control valve controller may control the intake control valve to open in the midway of the intake stroke of the cylinder in the downstream side and to close thereafter. In this way, when the operating state is in the impulse charge operating region, it is possible to perform the impulse charge. In addition, the intake control valve controller may control the intake control valve in such a manner that when the operating state is in a low-speed charge operating region, the intake control valve opens before start of an intake stroke in the cylinder in the downstream side and thereafter, closes before an intake valve of the corresponding cylinder closes. In this way, when the operating state is in the low-speed charge operating region, it is possible to perform the low-speed charge. Specifically when the operating state is in the low-speed charge operating region, the intake control valve controller preferably controls the intake control valve to close when a piston is in the vicinity of a bottom dead center. In this way, it is possible to more appropriately generate the low-speed charge. Further preferably the plurality of the intake control valves may be provided, wherein the intake control valve controller may control the intake control valve provided in the intake passage to the cylinder which is during an intake stroke to be opened and closed and the other intake control valve provided in the intake passage to the cylinder which is not during the intake stroke to be closed. In this way, it is possible to more accurately generate the air column vibration in the intake passage to the cylinder which is during the intake stroke.

Preferably when the intake control valve is controlled by the intake control valve controller, each of the various kinds of the internal combustion engines is provided with air quantity estimating means for estimating an air quantity aspired into the cylinder downstream of the intake control valve based upon at least one of an operating state of the intake control valve, a temperature in the intake passage downstream of the intake control valve, a pressure in the intake passage downstream of the intake control valve and a configuration characteristic of the intake passage having a passage length contributing to generation of the air column vibration and provided with the intake control valve therein. In this way, it is possible to appropriately estimate the air quantity aspired into each cylinder. In addition, the internal combustion engine in this case may be provided with a fuel injection controller for controlling fuel injection into the cylinder based upon the air quantity aspired into the cylinder during the intake stroke and estimated by the air quantity estimating means. In this way, since the most appropriate fuel injection can be performed appropriately considering the air quantity aspired into the cylinder, the fuel can be more appropriately burned in the combustion chamber, thereby generating desired torque.

Otherwise, preferably when the intake control valve is controlled by the intake control valve controller, each of the various kinds of the internal combustion engines is provided with a fuel injection controller for controlling fuel injection in such a manner as to inject into the cylinder fuel having a quantity corresponding to an air quantity aspired into the cylinder downstream of the intake control valve during an intake stroke based upon at least one of an operating state of the intake control valve, a temperature in the intake passage downstream of the intake control valve, a pressure in the intake passage downstream of the intake control valve and a configuration characteristic of the intake passage having a passage length contributing to generation of the air column vibration and provided with the intake control valve therein. In this way, it is possible to perform the most appropriate fuel injection considering the air quantity aspired into the cylinder appropriately. Therefore, the fuel can be more appropriately burned in the combustion chamber, thereby generating desired torque.

However, preferably the operating state of the intake control valve includes at least one of presence/absence of an operation of the intake control valve, an opening timing thereof for impulse charge, a closing timing thereof for impulse charge, an opening period thereof for impulse charge, a closing timing thereof for low-speed charge, and an operation speed thereof. In this case, the aforementioned air quantity estimating means or the aforementioned fuel injection controller can appropriately consider an influence of the intake control valve on the air flowing in the intake passage by considering the operating state of the intake control valve.

It should be noted that the temperature in the intake passage downstream of the intake control valve may be a temperature at the closing of the intake valve downstream of the intake control valve. In addition, the pressure in the intake passage downstream of the intake control valve may be a pressure at the closing of the intake valve downstream of the intake control valve. In these cases, the temperature or the pressure in the intake passage downstream of the intake control valve corresponds to a temperature or a pressure in the cylinder at the last stage of the intake stroke or at the initial stage of the compression stroke.

### BRIEF DESCRIPTION OF THE DRAWINGS

FIG. 1 is a schematic diagram showing an internal combustion engine system for a vehicle, to which a first embodiment is applied;
FIG. 2 is a schematic diagram showing a surge tank and a part downstream thereof in an intake system for the internal combustion engine in FIG. 1, wherein (a) is a diagram explaining the configuration of the surroundings of an intake manifold, (b) is a diagram explaining a vibration intake passage in regard to a cylinder of # 1, (c) is a diagram explaining a vibration intake passage in regard to a cylinder of # 2, (d) is a diagram explaining a vibration intake passage in regard to a cylinder of # 3, and (e) is a diagram explaining a vibration intake passage in regard to a cylinder of # 4;
FIG. 3 is a diagram showing an example of a control flow chart in the first embodiment;
FIG. 4 is time charts each conceptually showing a relation between an opening/closing timing of an intake control valve at the time of performing impulse charge and a pressure downstream of the intake control valve in the simulation result in a model based upon the first embodiment, and diagrams showing separately the simulation result during an intake stroke of each of the four cylinders;
FIG. 5 is a schematic diagram showing a surge tank and a part downstream thereof in an intake system for an internal combustion engine in a second embodiment;
FIG. 6 is time charts each conceptually showing for each of the four cylinders a relation between an opening/closing timing of an intake control valve at the time of performing impulse charge and a pressure downstream of the intake control valve in the simulation result in a model based upon the second embodiment;
FIG. 7 is a schematic diagram showing a surge tank and a part downstream thereof in an intake system for an internal combustion engine in a third embodiment;
FIG. 8 is a schematic diagram showing a surge tank and a part downstream thereof in an intake system for an internal combustion engine in a fourth embodiment;
FIG. 9 is a schematic diagram showing a surge tank and a part downstream thereof in an intake system for an internal combustion engine in a fifth embodiment;
FIG. 10 is a schematic diagram showing a surge tank and a part downstream thereof in an intake system for an internal combustion engine in a sixth embodiment;
FIG. 11 is a schematic diagram showing a surge tank and a part downstream thereof in an intake system for an internal combustion engine in a seventh embodiment;
FIG. 12 is a schematic diagram showing a surge tank and a part downstream thereof in an intake system for an internal combustion engine in an eighth embodiment;
FIG. 13 is a schematic diagram showing a surge tank and a part downstream thereof in an intake system for an internal combustion engine in a ninth embodiment;
FIG. 14 is a schematic diagram showing a surge tank and a part downstream thereof in an intake system for an internal combustion engine in a tenth embodiment;
FIG. 15 is an enlarged diagram showing the intake control valve in FIG. 14;
FIG. 16 is a schematic diagram showing a surge tank and a part downstream thereof in an intake system for an internal combustion engine in an eleventh embodiment;
FIG. 17 is a schematic diagram showing a surge tank and a part downstream thereof in an intake system for an internal combustion engine in a twelfth embodiment;

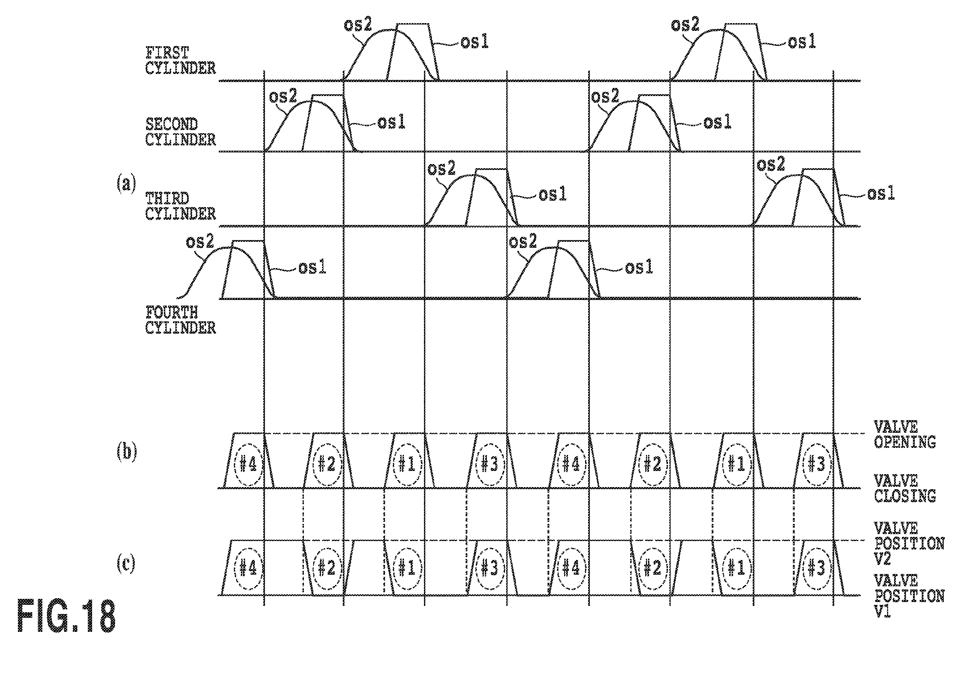

FIG. 18 is conceptual diagrams each explaining an operation example of an intake control valve in the twelfth embodiment, wherein (a) is a diagram showing a relation between an opening/closing position of the intake control valve during an intake stroke at the time of performing impulse charge for each of cylinders 16 and an opening/closing position of an intake valve at that time, (b) is a diagram where only the opening/closing positions of the intake control valve in (a) are extracted and are lined up, and (c) is a diagram showing operating valve-positions of the intake control valve in the twelfth embodiment for realizing the opening/closing positions of the intake control valve shown in (a) and (b);
FIG. 19 is a schematic diagram showing a surge tank and a part downstream thereof in an intake system for an internal combustion engine in a thirteenth embodiment;
FIG. 20 is a schematic diagram showing a surge tank and a part downstream thereof in an intake system for an internal combustion engine in a fourteenth embodiment;
FIG. 21 is a schematic diagram showing a surge tank and a part downstream thereof in an intake system for an internal combustion engine in a fifteenth embodiment;
FIG. 22 is conceptual diagrams each explaining an operation example of an intake control valve in the fifteenth embodiment, wherein (a) is a diagram extracting and lining up only opening/closing positions of the intake control valve during an intake stroke at the time of performing impulse charge for each of cylinders, and (b) is a diagram showing operating valve-positions of the intake control valve in the fifteenth embodiment for realizing the opening/closing positions of the intake control valve shown in (a);
FIG. 23 is a schematic diagram showing a filter member and a part downstream thereof in an intake system for an internal combustion engine in a sixteenth embodiment;
FIG. 24 is a schematic diagram showing an internal combustion engine system for a vehicle, to which a seventeenth embodiment is applied;
FIG. 25 is a flow chart for determining an execution fuel injection quantity in the seventeenth embodiment;
FIG. 26 is a flow chart for determining an execution fuel injection quantity in an eighteenth embodiment;
FIG. 27 is a flow chart for determining an execution fuel injection quantity in a nineteenth embodiment;
FIG. 28 is a flow chart for determining an execution fuel injection quantity in a twentieth embodiment;
FIG. 29A is a graph conceptually showing a relation between each opening of an intake valve and an intake control valve during an intake stroke and an in-cylinder pressure when the operating state is in a first operating region;
FIG. 29B is a graph conceptually showing a relation between each opening of an intake valve and an intake control valve during an intake stroke and an in-cylinder pressure when the operating state is in a second operating region;
FIG. 29C is a graph conceptually showing a relation between each opening of an intake valve and an intake control valve during an intake stroke and an in-cylinder pressure when the operating state is in a third operating region; and
FIG. 30 is a flow chart for determining an execution fuel injection quantity in a twenty-first embodiment.

### BEST MODE FOR CARRYING OUT THE INVENTION

Hereinafter, preferred embodiments in the present invention will be in detail explained with reference to the accompanying drawings. First, a first embodiment in the present invention will be explained.

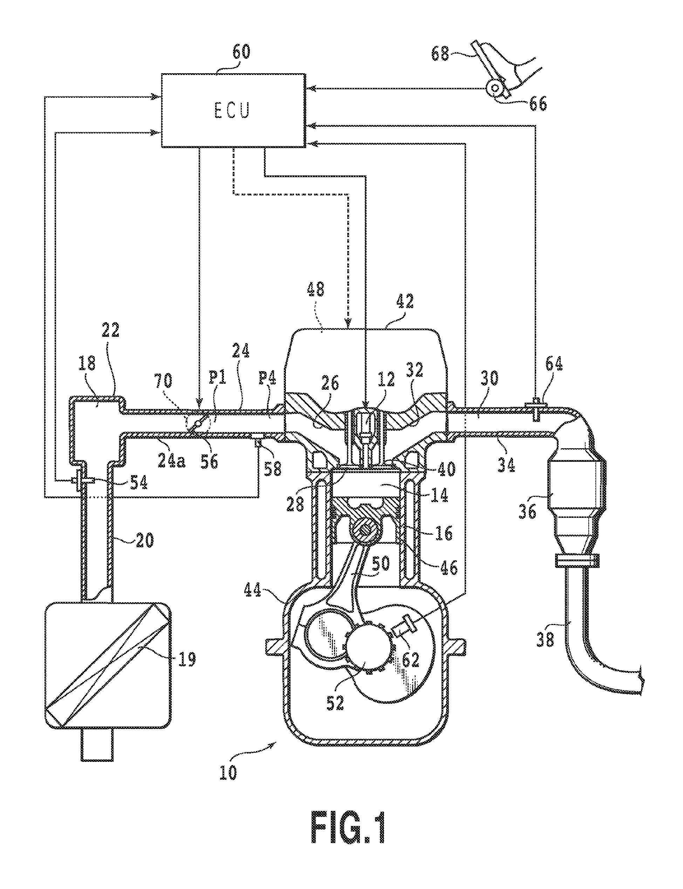

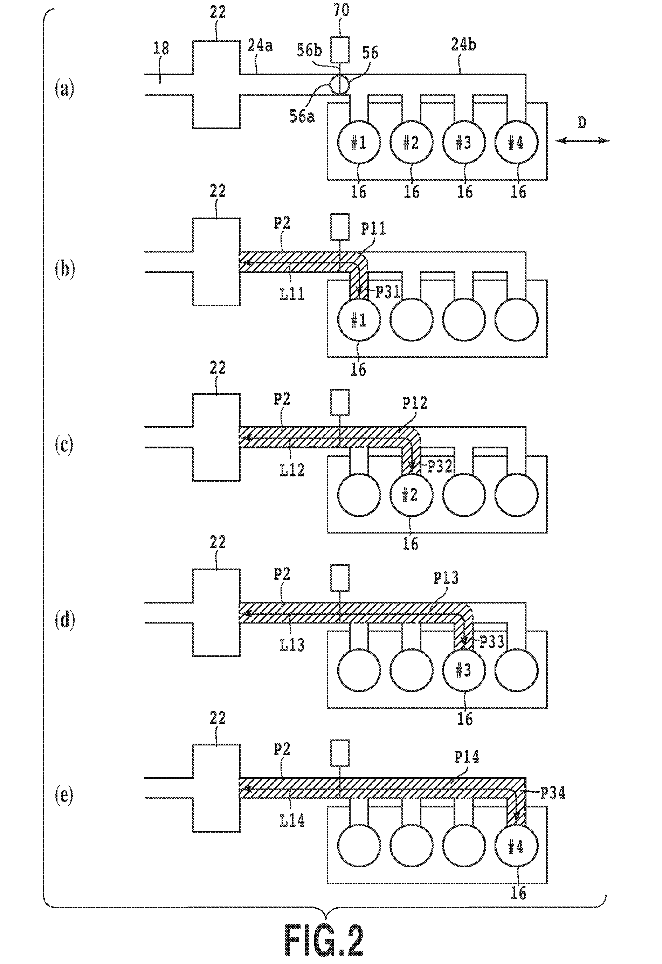

FIG. 1 schematically shows an internal combustion engine system for a vehicle, to which the first embodiment is applied. An internal combustion engine (engine) 10 in the first embodiment is an internal combustion engine in which light oil as fuel is directly injected from an injector 12 into a combustion chamber 14 in a compressed state to produce natural ignition, that is, a diesel engine. However, in FIG. 1, only one cylinder 16 is shown, but the internal combustion engine 10 is, as apparent from FIG. 2 (a) schematically showing a part of an intake system for the internal combustion engine 10, an in-line four-cylinder type internal combustion engine. It should be noted that four cylinders 16 arranged in series are shown in the order of #1, #2, #3, and #4 from one end (left end in FIG. 2).

An intake passage 18 is defined by an air cleaner 19, an intake pipe 20, a surge tank 22, an intake manifold 24 and an intake port 26 which are connected with each other. Particularly, a downstream end thereof is defined by the intake port 26 and an outlet of the intake port 26 is opened/closed by an intake valve 28 (not shown in FIG. 2). A surge tank 22 is provided as an enlarged portion in the intake passage 18 forming a large cross section thereof. It should be noted that the intake manifold 24 connected to the surge tank 22 will be described later. An exhaust passage 30 is defined by an exhaust port 32, an exhaust manifold 34, a catalyst 36 and an exhaust pipe 38 which are connected with each other. Particularly, an upstream end thereof is defined by the exhaust port 32 and an inlet of the exhaust port 32 is opened/closed by an exhaust valve 40. The intake passage 18 opened/closed by the intake valve 28 or the exhaust passage 30 opened/closed by the exhaust valve 40 in this way is communicated at the respective opening time with the combustion chamber 14 defined by a cylinder head 42, a cylinder block 44 and a piston 46 accommodated to be reciprocated in the cylinder 16 in the cylinder block 44.

A valve operating mechanism 48 is a mechanism which can individually control the intake valve 28 and the exhaust valve 40 in synchronization with rotation of a crank shaft 52 connected through a connecting rod 50 to the piston 46 at any opening and at any timing. Specifically the valve operating mechanism 48 includes a solenoid provided in each of the intake valve 28 and the exhaust valve 40. It should be noted that instead of such configuration, a variable valve timing mechanism (VVT) which can change valve timing and a cam profile of a single valve by switching two kinds of cams applied thereto by a hydraulic pressure may be used as the valve operating mechanism 48, for example. The valve operating mechanism 48 can realize valve overlapping in which the intake valve 28 and the exhaust valve 40 open simultaneously.

The catalyst 36 is provided for removing harmful substances such as CO, HC, and NOx in the exhaust gas. The catalyst 36 may be a three-way catalyst, an oxidation catalyst, or a NOx catalyst and etc. The catalyst may be provided as plural ones.

In FIG.1, the intake passage 18 is provided with an air flow meter 54, an intake control valve 56 and a pressure sensor 58 in that order from the upstream side. The air flow meter 54 outputs a signal in accordance with an air flow quantity passing therethrough to an electronic control unit (hereinafter, referred to as ECU) 60 as control means. The pressure sensor 58 outputs a signal in accordance with a pressure in the intake passage downstream of the intake control valve 56 to ECU 60. A pressure sensor may be provided for detecting a pressure in the intake passage upstream of the intake control valve, particularly upstream of the surge tank 22.

The intake passage 18 is configured so that upon tracing from the upstream side to the downstream side thereof, the cross sectional configuration in a location of the air cleaner 19 is large, the cross sectional configuration in a location of the intake pipe 20 downstream thereof is small, the cross sectional configuration in a location of the surge tank 22 further downstream thereof is large, and thereafter, the cross sectional configuration in a location of the intake manifold 24 is reduced. Therefore, the arrangement location of the intake control valve 56 is required to be provided in the intake passage 18 downstream of the surge tank 22 for impulse charge to be described later or the like. That is, the arrangement location of the intake control valve 56 is a position at a downstream end of the intake passage 18, that is, a position upstream of a position of the intake valve 28 of each cylinder 16 and a position downstream of the surge tank 22, particularly downstream of the downstream end in the surge tank 22.

In the first embodiment, only one intake control valve 56 is provided in the intake passage 18. That is, only one intake control valve 56 is commonly used for controlling the intake air in each of the cylinders 16. Therefore, the intake manifold 24 includes a common portion 24a connected to the surge tank 22 and in common to the four cylinders 16, and a branch portion 24b branched corresponding to each cylinder 16. Herein, the intake control valve 56 is provided in the common portion 24a. It should be noted that the pressure sensor 58 is also provided in the common portion 24a, which is not clearly shown in the figure.

Here, within a range of the intake passage 18, the intake passage from a position of the intake valve 28 in each cylinder 16 to the downstream end of the surge tank 22, that is, the intake passage to each cylinder 16 formed downstream of the surge tank 22 is referred to as "vibration intake passage" P1 respectively. This is because each vibration intake passage P1 is designed to have a passage length contributing to generation of the air column vibration for being capable of effectively performing impulse charge. The vibration intake passage P1 is provided as four passages for the reason of corresponding to each of the four cylinders 16. Each of them is shown by a code defined by further attaching the cylinder number thereto. For example, the vibration intake passage P1 in regard to the cylinder 16 of # 3 is shown by a code "P13". It should be noted that a hatched portion in FIG. 2 (b) shows the vibration intake passage P11 in regard to the cylinder 16 of #1, a hatched portion in FIG. 2 (c) shows the vibration intake passage P12 in regard to the cylinder 16 of #2, a hatched portion in FIG. 2 (d) shows the vibration intake passage P13 in regard to the cylinder 16 of #3, and a hatched portion in FIG. 2 (e) shows the vibration intake passage P14 in regard to the cylinder 16 of #4.

In the first embodiment, the four cylinders 16 are divided into one group, that is, put together into one group and air passing through the surge tank 22 is supplied through one common intake passage formed by the common portion 24a to each of the four cylinders 16. That is, as apparent in FIG. 2, the four vibration intake passages P11, P12, P13, and P14 in regard to the four cylinders 16 in the first embodiment are put together into one passage at the upstream side to be communicated with the surge tank 22. The intake passage which is thus formed by putting together the respective vibration intake passages P1 of the plural cylinders 16, is in common thereto and is communicated with the downstream end of the surge tank 22 is hereinafter referred to as "common intake passage" P2.

Each of the vibration intake passages P1 includes the common intake passage P2 directly communicated with the surge tank 22 and "an individual intake passage" P3 in regard to only a single cylinder 16 corresponding thereto (refer to FIG. 2). That is, in the first embodiment there are the one common intake passage P2 and the four individual intake passages P3. It should be noted that in the same way with the vibration intake passages P1, each of the individual intake passages P3 is shown by a code defined by further attaching the cylinder number thereto. The common intake passage P2 is defined by the common portion 24a and the four individual intake passages P3 are defined by the branch portions 24b.

According to the first embodiment, since the four vibration intake passages P1 extending from the respective cylinders 16 are shaped to be bent in a cylinder-line direction D as apparent in FIG. 2, the common intake passage P2 is positioned at the side of the cylinder 16 of #1. Therefore, among passage lengths L1 of the vibration intake passages P1 in regard to the four cylinders 16, a passage length L11 (refer to FIG. 2 (b)) of the vibration intake passage P11 in regard to the cylinder 16 of # 1 is the shortest, and a passage length L12 (refer to FIG. 2 (c)) of the vibration intake passage P12 in regard to the cylinder 16 of #2, a passage length L13 (refer to FIG. 2 (d)) of the vibration intake passage P13 in regard to the cylinder 16 of #3, and a passage length L14 (refer to FIG. 2 (e)) of the vibration intake passage P14 in regard to the cylinder 16 of #4 are longer in that order (L11< L12< L13< L14).

It should be noted that in the internal combustion engine 10 in the first embodiment, the aspiration during an intake stroke and the combustion of a mixture are periodically performed in the order of the cylinders of "#1, #3, #4, and #2". That is, the cylinder 16 of # 4 operates in the same way as the operation of the cylinder 16 of # 1 at a phase delayed by a crank angle of 360° from the operation of the cylinder 16 of # 1 and the cylinder of #2 operates in the same way as the operation of the cylinder 16 of # 3 at a phase delayed by a crank angle of 360° from the operation of the cylinder 16 of #3.

An electrical configuration of the internal combustion engine 10 will be described. ECU 60 is connected to the injector 12, the air flow meter 54, the intake control valve 56 and the pressure sensor 58 as described above, and in addition to them, a crank angle sensor 62, an oxygen concentration sensor 64, and an accelerator opening sensor 66. The injector 12 opens/closes based upon an on/off signal outputted from ECU 60 and thereby, fuel injection is performed/stopped. The crank angle sensor 62 outputs a pulse signal to ECU 60 by a given phase interval of a crank shaft 52. ECU 60 detects a phase of the crank shaft 52, that is, a crank angle based upon this pulse signal and computes a rotational speed of the crank shaft 52, that is, an engine rotational speed. The oxygen concentration sensor 64 outputs a signal in accordance with an oxygen concentration in the exhaust gas to ECU 60. Further, the accelerator opening sensor 66 outputs a signal in accordance with a position corresponding to a depressing amount of an accelerator pedal 68 operated by a driver to ECU 60. Thereby, ECU 60 can detect an accelerator opening.

ECU 60 determines a fuel injection quantity and a fuel injection timing based upon an engine operating state (operating state) to perform a fuel injection control. That is, ECU 60 retrieves data, which are in advance stored and mapped, from an engine rotational speed obtained based upon an output signal of the crank angle sensor 62 and an air flow quantity or air quantity obtained based upon an output value of the air flow meter 54. In addition, ECU 60 determines a fuel injection quantity and a fuel injection timing of the injector 12 and controls the injector 12 based upon these values.

However, ECU 60 can determine the fuel injection quantity and the fuel injection timing based upon an accelerator opening obtained based upon the output signal of the accelerator opening sensor 66 instead of the air quantity obtained based upon the output signal of the air flow meter 54 or together with it.

The above-mentioned intake control valve 56 comprises a valve body 56a disposed in the intake passage 18 and a valve shaft 56b connected to the valve body 56a. The valve body 56a is driven through the valve shaft 56b by an electric actuator 70 such as a rotary solenoid. It should be noted that a sensor may be further provided for detecting an opening of the valve body 56a in the intake control valve 56. The intake control valve 56 has the structure with high air-tightness that the intake passage 18 is completely closed at the fully closing time thereof, that is, blocked up to completely block the passing of the intake air. The electric actuator 70 of the intake control valve 56 is operable at high speeds, has high response and can open/close the valve body 56a in the order of about 10°CA of the crank angle unit, for example, within a couple of milliseconds. As a result, the intake control valve 56 can be opened/closed in synchronization with the opening/closing of the intake valve 28. Herein, the intake control valve 56 is of a butterfly type valve, but may be of the other type valve such as a shutter valve. An opening of the intake control valve 56 is controlled to any opening from a fully opened position to a fully closed position in accordance with an opening signal outputted from ECU 60 to the electric actuator 70. The intake control valve 56 may have the structure in such a manner that the intake passage 18 is not completely closed at the fully closing time, that is, is substantially closed.

The intake control valve 56 is used, for example, for performing so-called impulse charge. The outline of the impulse charge is in detail described in "Impulses for Greater Driving Fun" published on the ninth day of September by the press from Siemens VDO Automotive AG in Frankfurt Motor Show of 2003 Year. The impulse charge is effective when a rapid acceleration is required in passing or the like during vehicle running.

In a case of performing the impulse charge, the intake control valve 56 is controlled in such a manner that the intake control valve 56 is in a closing condition at start of opening the intake valve 28 and opens later than the opening of the intake valve 28, for example, opens at the later stage of the opening period of the intake valve 28. First, a negative pressure is formed in an intake passage (hereinafter, referred to as "valve-valve passage") P4 between the intake control valve 56 and the intake valve 28 in the duration from an opening start timing of the intake valve 28 to an opening start timing of the intake control valve 56. Thereafter, when the intake control valve 56 instantly opens, a negative pressure wave transmits up in the upstream side and is converted into a positive pressure wave at an opening end in the downstream end of the surge tank 22. Further this positive pressure wave advances in the downstream side and arrives at a position of the intake valve 28 or a position downstream thereof over the intake control valve 56. As a result, the intake air existing in the intake passage upstream of the intake control valve 56 at the time of opening the intake control valve 56 flows into the combustion chamber 14 in one shot. By closing the intake valve 28 or the intake control valve 56 and the intake valve 28 at this time, a great number of intake air can be filled in the combustion chamber 14 due to a kind of inertia charging effect. In other words, in the impulse charge, a pressure difference between the upstream side and the downstream side of the intake control valve is released at an appropriate timing to generate positively the air column vibration of the intake air in the vibration intake passage P1, thereby creating the intake pulsation to perform the charge. For appropriately generating the air column vibration, a diameter, a length and the like of the vibration intake passage P1 are defined. The vibration intake passage P1 is formed for each of the cylinders 16 and a passage length L1 thereof is in advance determined by an experiment in such a manner as to generate the air column vibration suitable for performing the impulse supercharge in regard to each of the cylinders 16. This supercharge starts at the same time with the start of controlling the intake control valve 56, that is, at the same time when the accelerator pedal 68 is depressed or immediately after it. Therefore, the impulse charge is more excellent in response than turbo supercharge starting with the rising of the turbine used in a vehicle at present and is suitable for eliminating an acceleration delay of a vehicle.

The intake control valve 56 can be used for the impulse charge as described above, but may be used also for adjusting an intake charge efficiency into each cylinder 16 except for the impulse charge. For example, when the intake valve 28 or the intake control valve 56 is controlled to be closed before the positive pressure wave reaches the combustion chamber 14, reduction of the intake air quantity to be aspired can be made intentionally. Further, the positive pressure wave reaches the combustion chamber 14 once and is then reversed back into the intake passage 18, and thereafter, the intake valve 28 is controlled to be closed. Thereby, the reduction of the intake air quantity to be aspired can be made intentionally. It should be noted that when the control of the intake air using the intake control valve 56 is not required, for example, when the impulse charge is not performed, the intake control valve 56 may be controlled to be held in a fully opened state. In this case, the intake control valve 56 may be made opened at the same time as the opening timing of the intake valve 28 and further, the intake control valve 56 may be made closed at the same time as the closing timing of the intake valve 28.

Particularly ECU 60 controls the operation of the electric actuator 70 and the valve operating mechanism 48 in order to make the intake charge efficiency in each cylinder 16 substantially equal between all the cylinders 16 in regard to the intake air control relating to the aforementioned impulse charge or the like at the time of a substantially equal operating state. For making the intake charge efficiency, that is, the intake air quantity in each of all the cylinders 16 equal, ECU 60 stores retrievably data in regard to an opening/closing timing of the intake control valve 56 set in accordance with the passage length L1 of the vibration intake passage P1 corresponding to each of the cylinders 16. The data is a data of the opening/closing timing of the intake control valve 56 having a relation associated with the opening/closing timing of the intake valve 28 and are defined based upon an engine rotation speed or an engine load. It should be noted that an accelerator opening, a fuel injection quantity or a fuel load rate based upon the fuel injection quantity may be used as the engine load. Specifically in the internal combustion engine 10, the opening/closing timing of the intake control valve 56 and the opening/closing timing of the intake valve 28 are set so that the impulse charge is performed at a high-load operating time. That is, when the operating state is in an impulse charge operating region as the high-load operating region, the opening/closing timing of each of the intake control valve 56 and the intake valve 28 is set to the opening/closing timing for the impulse charge. In addition, in the internal combustion engine 10, the opening/closing timing of each of them is set for generating the impulse charge at an acceleration demand. In addition, ECU 60 controls the intake control valve 56 or the intake valve 28 in accordance with the opening/closing timing of each of them. As a result, the intake control valve 56 controls the intake air in cooperation with the intake valve 28. It should be noted that the opening/closing timing of the intake valve 28 at the time of performing the impulse charge may be equal to the opening/closing timing of the intake valve 28 at the time of not performing the impulse charge.

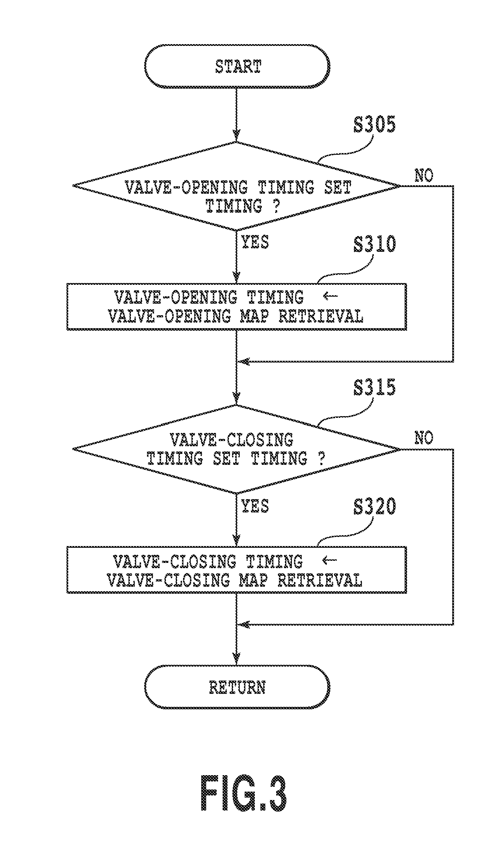

The control of the intake control valve 56 by ECU 60 will be explained based upon a flow chart in FIG. 3. The flow chart in FIG. 3 is repeated at about every 20ms.

At step S305, it is determined whether or not it is at a setting timing of the opening timing of the intake control valve 56. Specifically the determination is made by retrieving data in advance stored, based upon a crank angle found based upon an output signal from the crank angle sensor 62. When it is determined that it is at the setting timing of the opening timing, the positive determination is made, and on the other hand when it is determined that it is not at the setting timing of the opening timing of the intake control valve 56, the negative determination is made. It should be noted that the determination on whether or not it is at the setting timing of the opening timing of the intake control valve 56 may be made by the other method and reference.

When at step S305, the positive determination is made, at next step S310, the opening timing of the intake control valve 56 is retrieved and set. First, it is determined which one of the cylinders 16 is at the opening timing. Specifically since in the internal combustion engine 10, the aspiration during an intake stroke and the combustion of a mixture are, as described above, periodically performed in the order of the cylinders of "#1, #3, #4, and #2", valve-opening maps for the respective cylinders 16 are set in the first embodiment to be switched in the order of the cylinders of "#1, #3, #4, and #2". The switching of the valve-opening map is performed for each time the process goes to step S310, that is, each time the positive determination is made at step S305. For example, when the positive determination is made at step S305 in a state where the valve-opening map of the cylinder 16 of #1 is searchable, the valve-opening map of the cylinder 16 of # 3 can be made searchable as if the crank angle is determined to correspond to the opening timing of the cylinder 16 of #3 at this time. In this way, the determination is made on which one of the cylinders 16 is at substantially the opening timing. By retrieving the map based upon the engine rotation speed and the engine load obtained (detected or estimated) at that time, the opening timing is retrieved and set. For example, by retrieving the valve-opening map of the cylinder of #3 based upon them, the opening timing of the cylinder 16 of #3 is retrieved and set. The opening timing of the intake control valve 56 thus set is usably stored until the positive determination is made at step S305 in the subsequent routine. It should be noted that the switching of the valve-opening map may be determined based upon a crank angle. However, herein, at the start of the internal combustion engine 10, either one of the valve-opening maps is set based upon the crank angle at that time.

In addition, next after step S310 or next after the negative determination is made at step S305, a determination at step S315 is made. At step S315, it is determined whether or not it is at a setting timing of the closing timing of the intake control valve 56. This determination is made based upon the crank angle in the same way as at step S305 described above. It should be noted that the determination on whether or not it is at the setting timing of the closing timing of the intake control valve 56 may be made by the other method and reference.

When at step S315, the positive determination is made, at next step S320, the closing timing is retrieved and set, which is also carried out in the same way as at step S310. First, it is determined which one of the cylinders 16 is at the closing timing. Valve-closing maps for respective cylinders 16 are set to be switched for the order of the cylinders of "#1, #3, #4, and #2", like the valve-opening maps. The switching of valve-closing map is performed for each time the process goes to step S320, that is, each time the positive determination is made at step S315. By retrieving the map based upon the engine rotational speed and the engine load obtained at that time, the closing timing is retrieved and set. Further, by retrieving the valve-opening map of the cylinder of #3 based upon an engine rotational speed or an engine load, the opening timing of the cylinder of #3 is retrieved and set. The closing timing of the intake control valve 56 thus set is usably stored until the positive determination is made at step S315 in the subsequent routine. It should be noted that the switching of the valve-closing map may be determined based upon a crank angle. However, herein, at the start of the internal combustion engine 10, either one of the valve-closing maps is set based upon the crank angle at that time.

In addition, an operation signal is outputted to the electric actuator 70 so that the intake control valve 56 is operable to open/close at the opening/closing timing of the intake control valve 56 switched and set as described above. It should be noted that the routine at that time ends by completion of step S320 or by the negative determination at step S315.

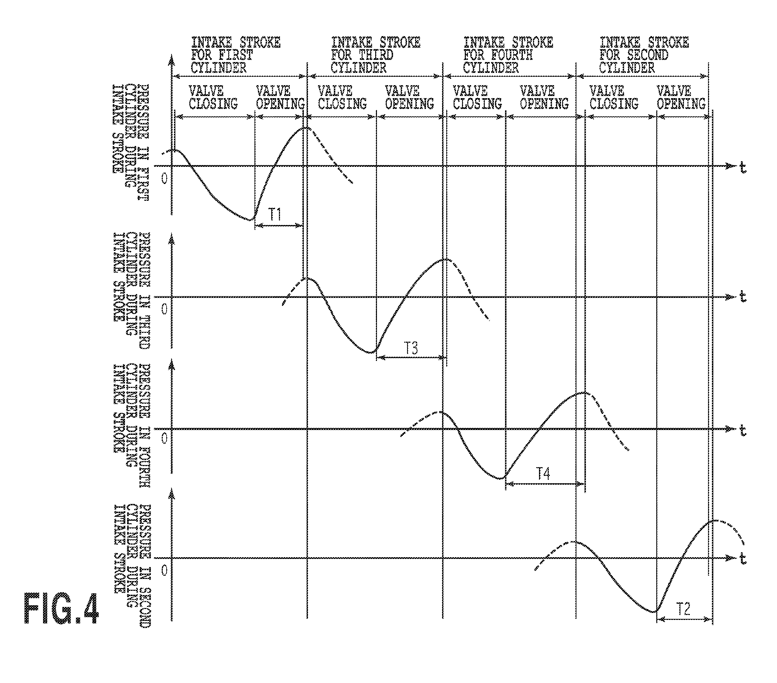

Here, the computer simulation result using a model based upon the configuration in the first embodiment is conceptually shown in FIG. 4. It should be noted that in this model (not shown), there is provided only one intake control valve 56 common to the four vibration intake passages P1 in regard to the four cylinders 16 as described above. FIG. 4 shows a relation between an opening/closing timing of the intake control valve 56 at the time of performing the impulse charge and a pressure downstream of the intake control valve 56, in more detail a pressure at a position of the intake valve 28 of the cylinder 16 during an intake stroke by a longitudinal axis of pressure (the pressure gets higher in the upward direction in the figure) and a lateral axis of time t (the time advances in the right direction in the figure).

Since in FIG. 4, the intake stroke is shown as a period of a motion of the piston 46 from top dead center to bottom dead center, the intake stroke of the cylinder 16 of #1 ("first cylinder" in FIG. 4), the intake stroke of the cylinder 16 of #2 ("second cylinder" in FIG. 4), the intake stroke of the cylinder 16 of # 3 ("third cylinder" in FIG. 4), and the intake stroke of the cylinder 16 of #4 ("fourth cylinder" in FIG. 4) are equal in length. In this case, in one cylinder 16 during the intake stroke among the four cylinders 16, the intake valve 28 in the cylinder 16 is opened before the intake control valve 56 opens and at the same instant when the intake control valve 56 closes, the intake valve 28 in the cylinder 16 closes. According to FIG. 4, in regard to each of the cylinders 16 during the intake stroke, a pressure downstream of the intake control valve 56 is the highest at the completion of the opening period (closing timing) of the intake control valve 56. This means that the positive pressure wave at that time has reached a position of the intake valve 28. Therefore, it should be understood that the impulse charge due to the positive pressure wave is appropriately performed in each cylinder 16. Therefore, the intake charge efficiency of each cylinder 16 is made equal substantially between all the cylinders 16.

As apparent from FIG. 4, the opening period of the intake control valve 56 in each of the cylinders 16 differs. Among the opening periods of the intake control valve 56 in regard to all the cylinders 16, an opening period T1 in regard to the cylinder 16 of # 1 is the shortest, and an opening period T2 in regard to the cylinder 16 of #2, an opening period T3 in regard to the cylinder 16 of #3, and an opening period T4 in regard to the cylinder 16 of #4 are longer in that order (T1< T2< T3< T4). This opening period relation corresponds to the passage length relation that the passage length L11 of the vibration intake passage P11 in regard to the cylinder 16 of #1, the passage length L12 of the vibration intake passage P12 in regard to the cylinder 16 of #2, the passage length L13 of the vibration intake passage P13 in regard to the cylinder 16 of #3, and the passage length L14 of the vibration intake passage P14 in regard to the cylinder 16 of #4 are longer in that order (L11< L12 < L13 < L14). That is, herein in the cylinder 16, as the passage length L1 of the corresponding vibration intake passage P1 is the longer, the opening period of the corresponding intake control valve 56 is the longer. This is because at the time of performing the impulse charge, the time within which the negative pressure wave runs back, is converted into the positive pressure wave, and the positive pressure wave reaches a position downstream of the intake control valve 56, particularly a position of the intake valve 28 differs depending on the passage length L1 of the vibration intake passage P1. Therefore, a substantially equal quantity of intake air can be charged into each cylinder 16.

In the simulation showing the result in FIG. 4, in the cylinder 16, as the passage length L1 of the corresponding vibration intake passage P1 is the longer, the opening period of the corresponding intake control valve 56 is the longer, but the opening period of the intake control valve 56 in each cylinder 16 is not limited to this relation. The opening period of the intake control valve 56 is defined to an appropriate period based upon a relation between the opening timing and the closing timing of the intake valve 28 and the opening timing and the closing timing of the intake control valve 56. The opening/closing timing of the intake control valve 56 and the opening/closing timing of the intake valve 28 are set in accordance with the passage length L1 of the vibration intake passage P1 in regard to each cylinder 16 so that the intake charge efficiency of each cylinder 16 is made substantially equal among all the cylinders 16 when the engine is in the same operating state or in a generally equal operating state. This set value can be found by an experiment.

In the first embodiment, the four vibration intake passages P1 extending from the respective cylinders 16 are bent in the cylinder-line direction D and the common intake passage P2 is positioned in a side of the cylinder 16 of # 1. Since most of the vibration intake passages P1 in regard to the respective cylinders 16 are formed linearly with this configuration, the damping of the air column vibration generated for the impulse charge is restricted, for example.

As described above, the present invention is in detail exemplified based upon the first embodiment, but various modifications of the present invention are allowable. Hereinafter, the other embodiments of the present invention will be explained. However, in the explanation of each of the following embodiments, an explanation of the control similar to that of the first embodiment is omitted. The control of the first embodiment is performed so that the opening/closing timing of the intake control valve 56 corresponding to each of the cylinders 16 is set in accordance with the passage length L1 of the corresponding vibration intake passage P1 to control the intake control valve 56 based upon the opening/closing timing. However, between the cylinders 16 each having the same passage length L1 of the corresponding vibration intake passage P1, the opening/closing timing of the corresponding intake control valve 56 may be equal. For simplification of the explanation, components identical to those in the internal combustion engine system explained above are referred to as identical codes in the following explanation, and the explanation is omitted.

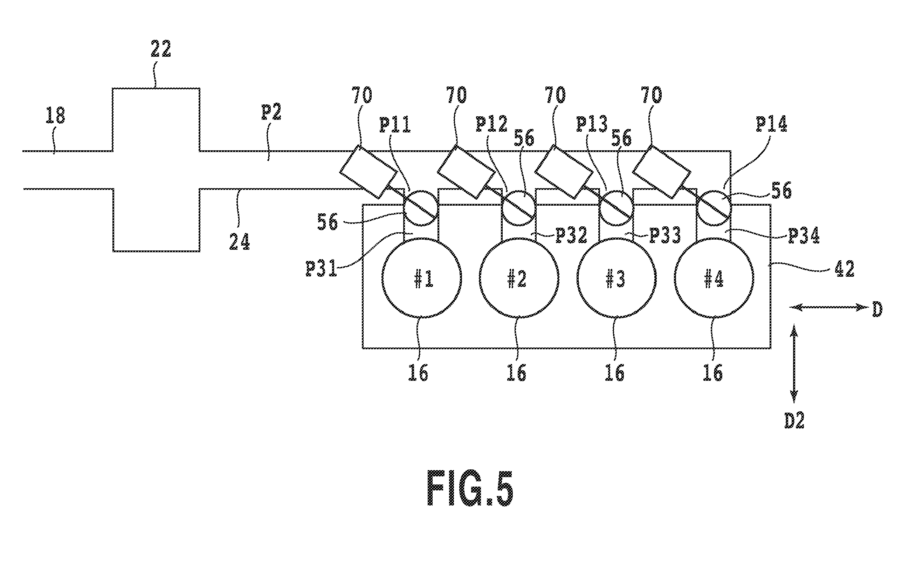

Next, a second embodiment will be explained with reference to FIG. 5. The second embodiment, which is different from the first embodiment, is provided with the intake control valves 56 arranged individually. Specifically the intake control valve 56 corresponding to each cylinder 16 is provided in the individual intake passage P3. In this way, an opening/closing drive of the intake control valve 56 can be appropriately performed at an opening/closing timing specific in each cylinder 16.

In regard to each cylinder 16, the intake control valve 56 may be provided at the more downstream side in the vibration intake passage P1. In this way, since a volume of the vibration intake passage P1 downstream of the intake control valve 56 is small, that is, the valve-valve passage P4 is small, for example, the impulse charge can, as described above, be generated effectively. From this viewpoint, in the second embodiment, each intake control valve 56 is provided in a location in the individual intake passage P3 which is formed by each intake port 26. Although not clearly shown in FIG. 5, the electric actuator 70 for controlling each intake control valve 56 is provided to protrude outside of the cylinder head 42.

The control of the intake control valve 56 in the second embodiment is performed in the same way as the control in the first embodiment. For example, in the intake stroke in regard to the cylinder 16 of # 1, the intake control valve 56 in the intake passage P11 corresponding to the cylinder 16 of # 1 is controlled to be opened in such a manner as to open at an opening timing obtained based upon a valve-opening map in regard to the cylinder 16 of # 1. In addition, the intake control valve 56 in the intake passage P11 corresponding to the cylinder 16 of # 1 is controlled to be closed in such a manner as to closed at a closing timing obtained based upon a valve-closing map in regard to the cylinder 16 of # 1. Thus in the intake stroke in regard to the cylinder 16 of # 1, the intake control valve 56 in the intake passage P11 corresponding to the cylinder 16 of # 1 is controlled to be opened/closed in such a manner as to open/close at an opening/closing timing specific in the cylinder 16 of # 1.

FIG. 5 shows that all of the intake control valves 56 are controlled to open simultaneously, but it is not preferable to thus control them at the time of performing the impulse charge. In the second embodiment, when the cylinder 16 of # 1 is during the intake stroke at the time of performing the impulse charge, the intake control valve 56 corresponding to the cylinder 16 of # 1 is, as described above, controlled to be opened/closed, but the intake control valve 56 in each of the intake passages P12, P13, and P14 to the cylinders 16 other than the cylinder 16 of # 1 which are not during the intake stroke is controlled to be closed. That is, the intake control valve 56 in regard to the cylinder 16 which is not during the intake stroke remains to be closed, and only the intake control valve 56 in regard to the cylinder 16 which is during the intake stroke is controlled to be opened/closed. Therefore, at the time of performing the impulse charge, the air column vibration can be more accurately generated in the vibration intake passage P1 corresponding to one cylinder which is during the intake stroke.

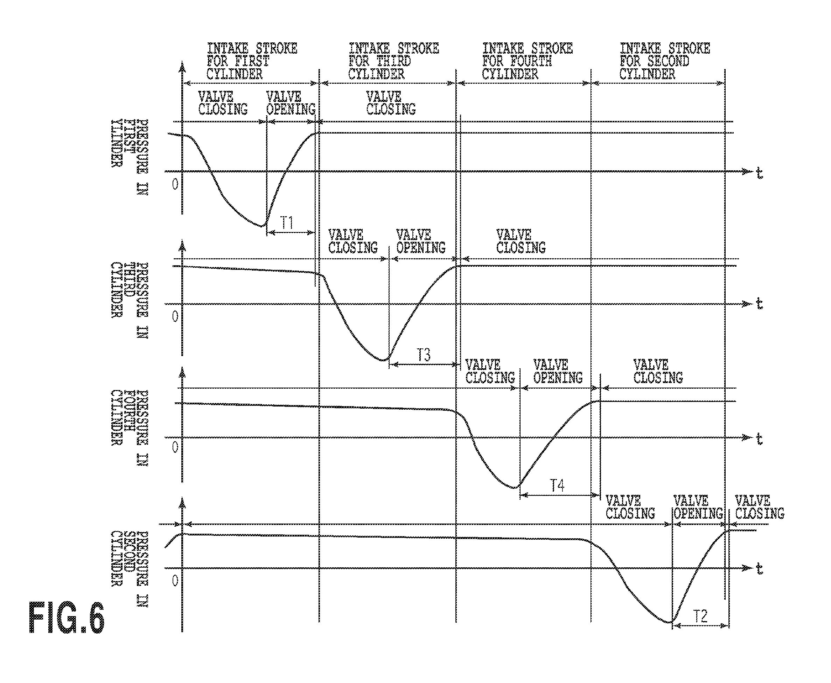

Here, the computer simulation result using a model based upon the configuration in the second embodiment is conceptually shown in FIG. 6. It should be noted that in this model (not shown), the intake control valve 56 is provided individually in each of the four vibration intake passages P1 in regard to the four cylinders 16 as described above. A graph in FIG. 6 shows the computer simulation result in regard to the second embodiment in the same way as in FIG. 4 showing the computer simulation result in the first embodiment. That is, FIG. 6 shows a relation between an opening/closing timing of the intake control valve 56 at the time of performing the impulse charge and a pressure at a position of the intake valve 28 of each of the four cylinders 16. In FIG. 6, a pressure change at the position of the intake valve 28 for each cylinder 16 is shown for each cylinder 16. It should be noted that in the simulation in regard to the impulse charge also, the opening period of the intake control valve 56 corresponding to each cylinder 16 differs and in the cylinder 16 where the passage length L1 of the corresponding vibration intake passage P1 is the longer (L11 < L12 < L13 < L14), the opening period of the corresponding intake control valve 56 is made the longer (T1 < T2< T3 < T4).

In regard to each of the four cylinders 16, a pressure downstream of the intake control valve 56 is high at the completion of the opening period (closing timing) of the intake control valve 56. This means that the positive pressure wave has reached a position of the intake valve 28 at that time. Therefore, it should be understood that the impulse charge due to the positive pressure wave is appropriately performed in each cylinder 16. It should be noted that when each cylinder 16 is not during the intake stroke, since the intake valve 28 and the intake control valve 56 both are made to be in a closed state, the pressure in a position of the intake valve 28 does not substantially change.

In a case of being provided with the plural intake control valves 56 as in the case of the second embodiment, it is, as described above, preferable that the intake control valve 56 other than the intake control valve 56 to the cylinder 16 which is during the intake stroke is basically controlled to be closed. In other words, in a case of being provided with the plural intake control valves 56, it is preferable that each of the plural intake control valves 56 is basically controlled to be closed, and only the intake control valve 56 to the cylinder 16 which is during the intake stroke is controlled to be opened in such a manner as to open at a given opening timing and is controlled to be closed in such a manner as to close at a given closing timing after that. This control can be likewise applied also to a case of being provided with two or more intake control valves 56 in respective embodiments to be described later. This control can be applied not only at the time of performing the impulse charge but also at the other time.

In the first embodiment or in the second embodiment, the intake passages in regard to the respective cylinders, that is, the vibration intake passages P1 are configured to be merged at one end in the cylinder-line direction D, but these passages may be merged at a location other than the above end. For example, each vibration intake passage P1 extends in a direction D2 vertical to the cylinder-line direction D (refer to FIG. 5), which further, merges in the vicinity between the cylinder 16 of # 2 and the cylinder 16 of # 3 in the cylinder-line direction D. With such configuration, the common intake passage P2 may be formed. In this case, the passage length L11 and the passage length L12 of the two vibration intake passages P11 and P12 in regard to the cylinder 16 of # 1 and the cylinder 16 of # 4 are generally equal, and the passage length L12 and the passage length L13 of the two vibration intake passages P12 and P13 in regard to the cylinder 16 of # 2 and the cylinder 16 of # 3 are generally equal.

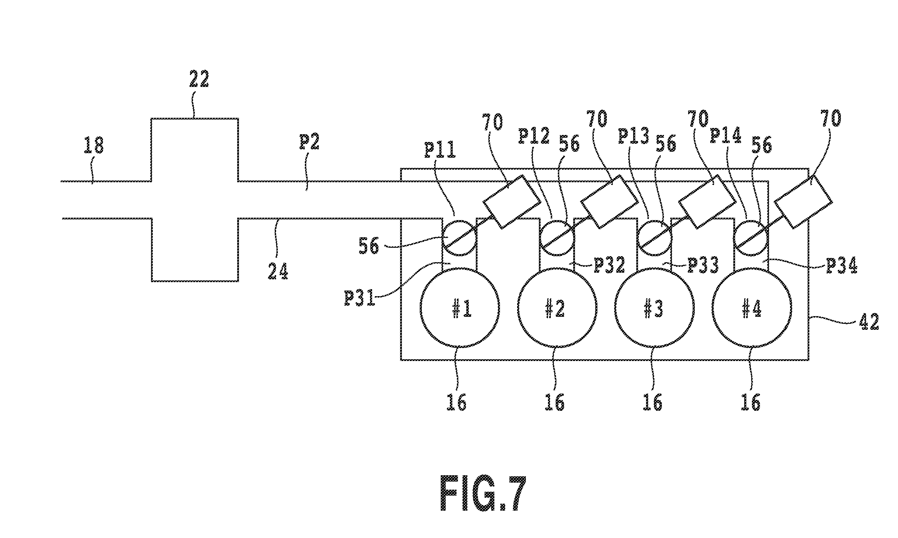

Next, a third embodiment as a modified version of the second embodiment will be explained with reference to FIG. 7. In the third embodiment, which is different from the second embodiment, all of the individual intake passages P3 in regard to the respective cylinders 16 are formed in the cylinder head 42. In consequence, the downstream end of the common intake passage P2 is also formed in the cylinder head 42. As a result, a member constituting the intake manifold 24 just becomes a circular pipe and defines only a part of the common intake passage P2.

Therefore, it is possible to further downsize the intake system for the internal combustion engine 10 in the third embodiment. In addition, this configuration enables reduction of the number of components forming the intake passage 18 and elimination of jobs for jointing these connection portions. Accordingly, there is no possibility of leakage of air from these connection portions. Further, by this configuration, each of the passage lengths L11, L12, L13 and L14 of the vibration intake passages P11, P12, P13 and P14 can be further shortened. Therefore, for example, at the time of performing the impulse charge, it is possible to more effectively generate it.

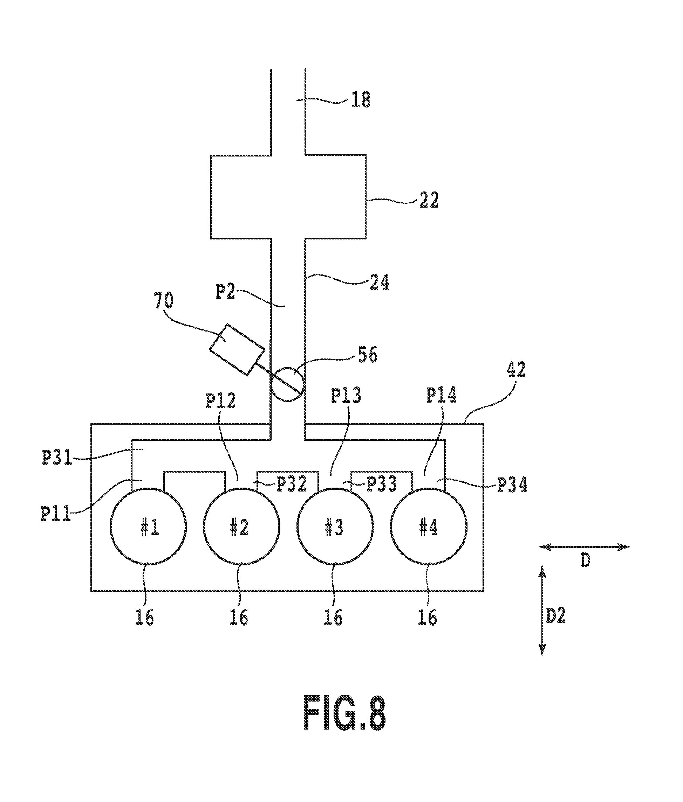

In the third embodiment, the intake control valve 56 is provided in the individual intake passage P3, but as in the case of the first embodiment, only one commonly used intake control valve 56 may be arranged in the common intake passage P2. A fourth embodiment thus configured is shown in FIG. 8. In the fourth embodiment, which is different from the third embodiment, each vibration intake passage P1 extends in a direction D2 vertical to the cylinder-line direction D (refer to FIG. 5), and further, vibration intake passages P1 merges in the vicinity between the cylinder 16 of # 2 and the cylinder 16 of # 3 in the cylinder-line direction D, thereby a single common intake passage P2 is formed. In this case, the intake control valve 56 may be provided in a location in the common intake passage P2 which is defined by the cylinder head 42.

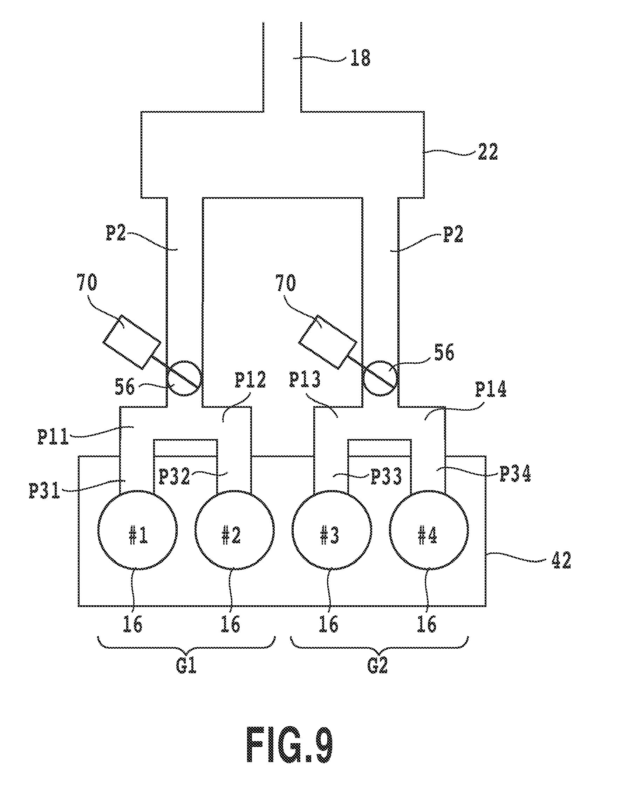

Next, a fifth embodiment will be explained with reference to FIG. 9. In the fifth embodiment, the four cylinders 16 are divided into groups G, each of which consists of adjacent cylinders 16. Herein, the four cylinders 16 are divided into two groups of a first group G1 and a second group G2 each having two cylinders. The first group G1 is configured of the neighboring cylinders of the cylinder 16 of # 1 and the cylinder 16 of # 2, and the second group G2 is configured of the neighboring cylinders of the cylinder 16 of # 3 and the cylinder 16 of # 4. In regard to each of the first group G1 and the second group G2, a single common intake passage P2 communicated with the surge tank 22 is formed. That is, the fifth embodiment is configured so that in each group G1, G2, two individual intake passages P3 in regard to the neighboring cylinders 16 branch from the single common intake passage P2. This means that one common intake passage P2 is formed by two vibration intake passages P1 in regard to the neighboring cylinders 16. That is, since the internal combustion engine 10 in the fifth embodiment is an in-line four-cylinder type internal combustion engine, two common intake passages P2 are formed of the one common intake passage P2 by the vibration intake passage P11 in regard to of the cylinder 16 of # 1 and the vibration intake passage P12 in regard to of the cylinder 16 of # 2 and the one common intake passage P2 by the vibration intake passage P13 in regard to of the cylinder 16 of # 3 and the vibration intake passage P14 in regard to of the cylinder 16 of # 4. In addition, the one intake control valve 56 is provided in each of the common intake passages P2. It should be noted that the one electric actuator 70 is provided in the one intake control valve 56.

FIG. 9 shows the configuration in such a manner that a length of the vibration intake passage P11 in regard to the cylinder 16 of # 1 is generally the same as that of the vibration intake passage P12 in regard to the cylinder 16 of # 2, but these lengths may be different from each other. The same can be applied to a relation between the vibration intake passage P13 in regard to the cylinder 16 of # 3 and the vibration intake passage P14 in regard to the cylinder 16 of # 4.

According to the configuration of the fifth embodiment, since the vibration intake passages P1 in regard to the cylinders which are positioned away from each other are not made associated with each other, a length of the vibration intake passage P1 in regard to each cylinder 16 can be shortened. As a result, the damping of the air column vibration generated at the time of performing the impulse charge is restricted. Therefore, according to the fifth embodiment, the impulse charge can be more effectively generated.

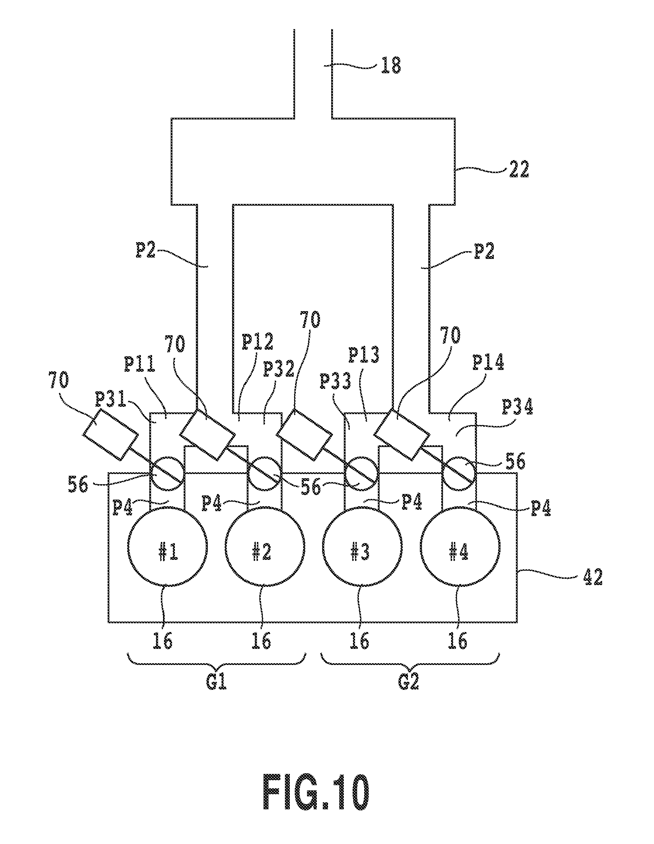

Next, a sixth embodiment as a modified version of the fifth embodiment will be explained with reference to FIG. 10. In the sixth embodiment, which is different from the fifth embodiment, the intake control valve 56 is provided individually in each of the vibration intake passages P1. That is, the intake control valve 56 is provided in the individual intake passage P3 in regard to each cylinder 16. In the sixth embodiment, the intake control valve 56 is provided in a location in the individual intake passage P3 which is defined by the intake port 26. In this way, not only a length of the vibration intake passage P1 in regard to each cylinder 16 can be shortened but also a volume of the valve-valve passage P4 downstream of the intake control valve 56 can be made small. Therefore, the impulse charge can be further effectively generated.

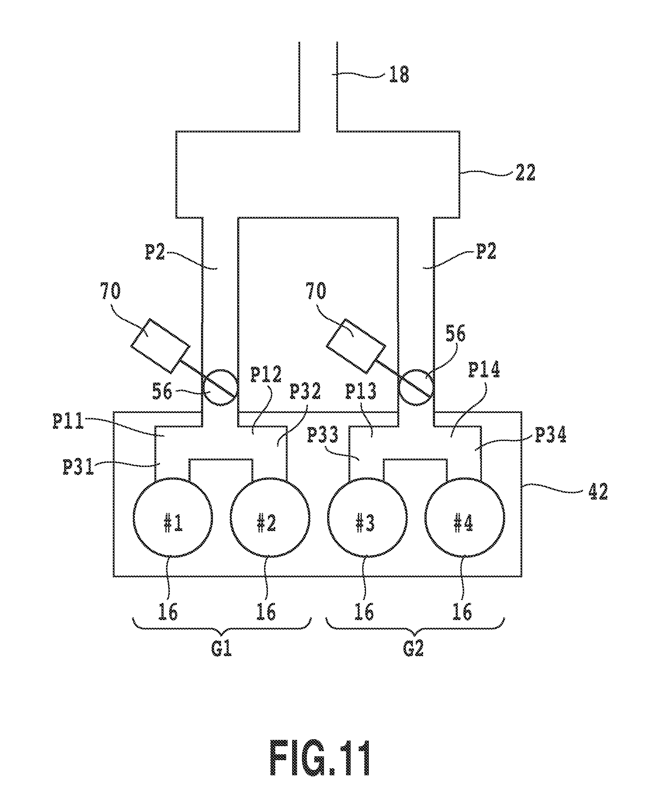

It should be noted that in the internal combustion engine in each of the fifth embodiment and the sixth embodiment, all of the individual intake passages P3 may be formed in the cylinder head 42. FIG. 11 conceptually shows a part of an intake system of a seventh embodiment as a modified version of the fifth embodiment, which is thus configured. In this way, the effect similar to that described in the third embodiment can be further achieved.

In each of the fifth to seventh embodiments, the one electric actuator 70 is provided to be associated with the one intake control valve 56. However, from a viewpoint of cost reduction and downsizing of the intake system, it is preferable to reduce the number of the electric actuators 70. Next, embodiments created based upon the above viewpoint will be explained.

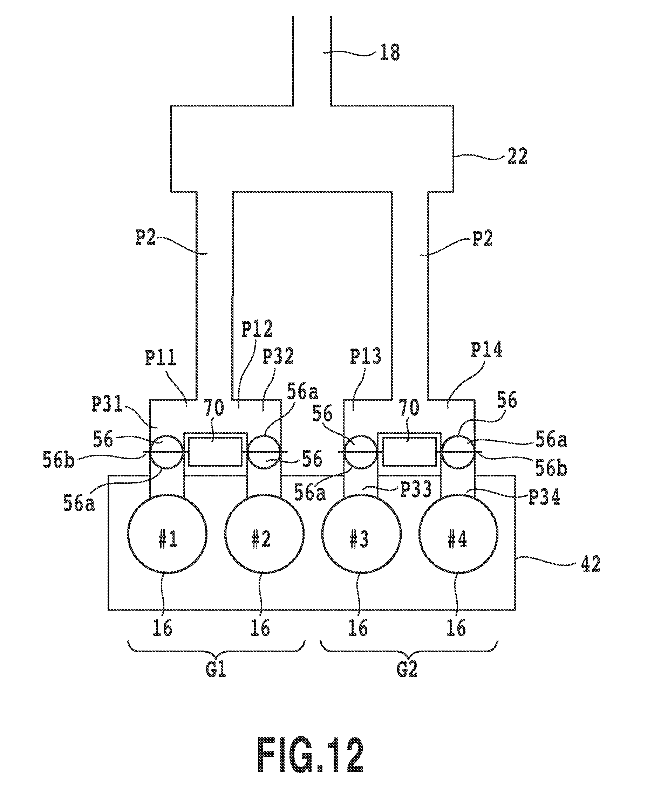

An eighth embodiment will be explained with reference to FIG. 12. In the eighth embodiment, the one electric actuator 70 is used for operating the two intake control valves 56. The intake control valve 56 is provided in the individual intake passage P3 in regard to each cylinder 16. A valve body 56a of the intake control valve 56 provided in the individual intake passage P31 in regard to the cylinder 16 of #1 and a valve body 56a of the intake control valve 56 provided in the individual intake passage P32 in regard to the cylinder 16 of # 2 are connected by one valve shaft 56b. The one electric actuator 70 is provided for driving the one valve shaft 56b. In the eighth embodiment, the electric actuator 70 is provided to be positioned between the intake control valve 56 provided in the one individual intake passage P31 and the intake control valve 56 provided in the neighboring individual intake passage P32. Herein, by operating the electric actuator 70, the two intake control valves 56 can be controlled to the same opening.

For example, when the cylinder 16 of #1 is during an intake stroke, the intake control valve 56 corresponding to the cylinder 16 of #1 is opened to a given opening. Thereby the intake control valve 56 corresponding to the cylinder 16 of #2 is opened to the same opening. However, the intake valve 28 of the cylinder 16 of #1 is controlled to be opened/closed at this time, but since the cylinder 16 of #2 is not during the intake stroke, the intake valve 28 for the cylinder 16 of #2 is maintained to be in a closed state without being opened. Therefore, the control of the electric actuator 70 in response to the intake stroke of the cylinder 16 of #1 does not almost influence the intake stroke of the cylinder 16 of #2. It should be noted that the above explanation is likewise applied to the control of the intake control valve 56 corresponding to the cylinder 16 of #3 and the intake control valve 56 corresponding to the cylinder 16 of #4.

However, in the eighth embodiment, the electric actuator 70 is provided nearly in the midway of the valve shaft 56b, but may be provided in the end thereof. For example, the single valve shaft 56b in regard to the cylinder 16 of #1 and the cylinder 16 of #2 penetrates through the individual intake passage P31 in regard to the cylinder 16 of #1 to extend in a direction opposite to the side of the cylinder 16 of #2. The electric actuator 70 may be provided in an end of the extended valve shaft 56b.

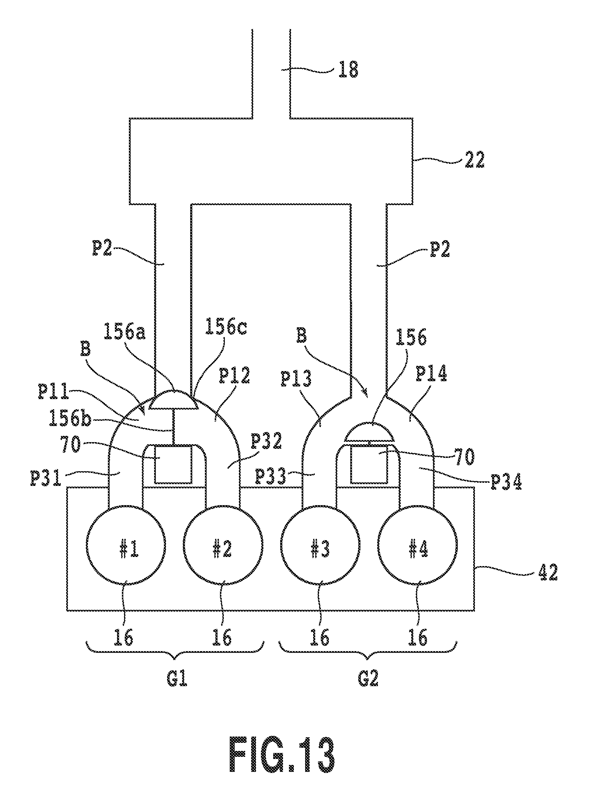

Next, a ninth embodiment will be explained with reference to FIG. 13. The ninth embodiment has the configuration generally similar to that in the fifth embodiment (refer to FIG. 9), but an intake control valve 156 is arranged in a boundary portion between the common intake passage P2 and the two individual intake passages P3. The two vibration intake passages P1 are shaped so that the common intake passage P2 is smoothly connected to the two individual intake passages P3 at the boundary portion (refer to FIG. 13). As a result, in each of the group G1 and the group G2, a branch portion B of a generally Y-shaped type is, as apparent from FIG. 13, formed at the boundary portion between the one common intake passage P2 and the two individual intake passages P3. It should be noted that the branch portion B is included in the intake passage 18. The intake control valve 156 in the ninth embodiment is configured to close when a valve body 156a thereof contacts against a valve seat 156c at the upstream end of the branch portion B and fully open when the valve body 156a is positioned at the downstream end of the branch portion B. The valve body 156a is linearly movable between the upstream end and the downstream end of the branch portion B. That is, the intake control valve 156 is made of a poppet type valve. In FIG. 13, the intake control valve 156 in regard to the cylinder 16 of # 1 and the cylinder 16 of # 2 is in a closed state and the intake control valve 156 in regard to the cylinder 16 of #3 and the cylinder 16 of #4 is in an opened state.

In the ninth embodiment, since the vibration intake passage P1 is shaped as described above, a flow resistance of air from the common intake passage P2 to the individual intake passage P3 is reduced. Further, by using the intake control valve 156 configured as described above, the closing of the two vibration intake passages P1 is ensured at the closing time of the intake control valve 156. Therefore, it is possible to more effectively generate the impulse charge.

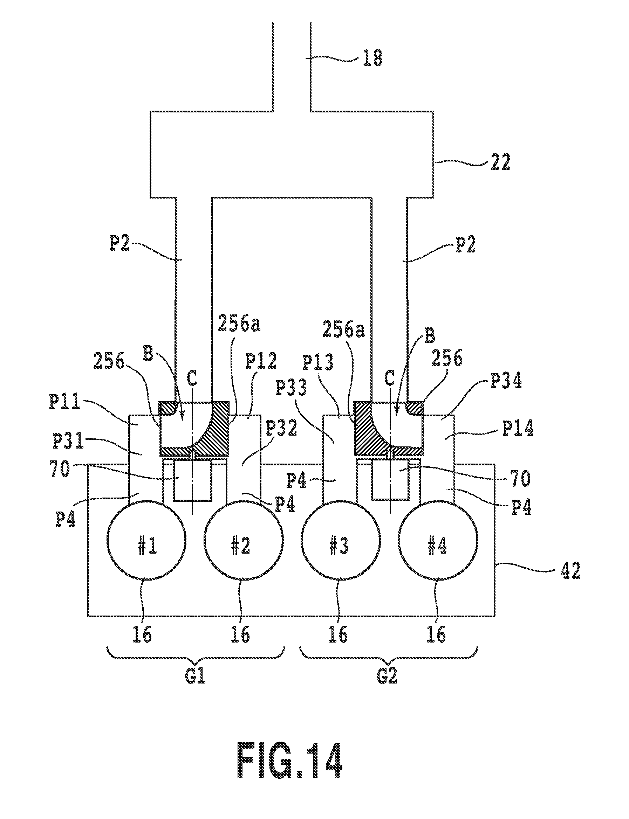

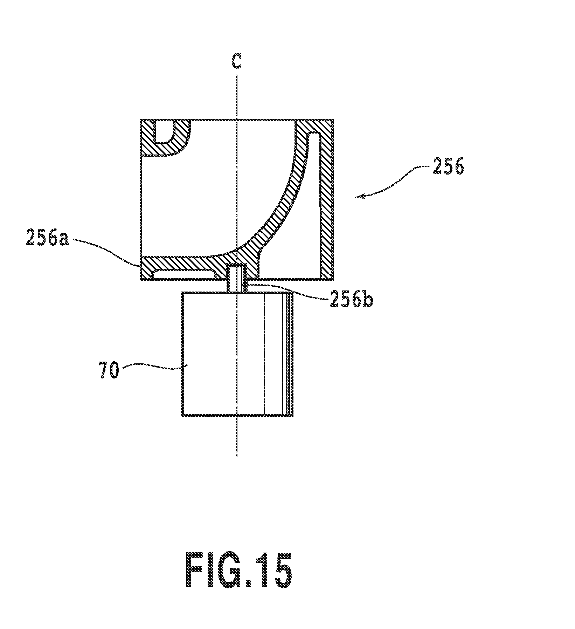

Next, a tenth embodiment will be explained with reference to FIGS. 14 and 15. An intake control valve 256 in the tenth embodiment is different from the intake control valves 56 and 156 of the above embodiments. In the tenth embodiment, the intake control valve 256 is, as in the case of the ninth embodiment, arranged in the branch portion B in the boundary portion between the common intake passage P2 and the two individual intake passages P3. However, the intake control valve 256 in the tenth embodiment is, which is different from the intake control valve 156, configured so that when the intake control valve 256 opens the vibration intake passage P1 in regard to the one cylinder 16, it blocks the vibration intake passage P1 in regard to the other one cylinder 16. Specifically the cylinder 16 of #1 and the cylinder 16 of #2 in the first group G1 will be explained. It should be noted that since the same explanation is applied to the cylinder 16 of #3 and the cylinder 16 of # 4 in the second group G2, an explanation thereof is omitted.

The periphery of the branch portion B in the vibration intake passage P11 in regard to the cylinder 16 of # 1 and the vibration intake passage P12 in regard to the cylinder 16 of # 2, which is positioned in the boundary portion between the one common intake passage P2 and the two individual intake passage P3, is formed symmetrically around the intake control valve 256 commonly used, that is, around a rotation axis C of the intake control valve 256. The valve body 256a of the intake control valve 256 is communicated with the common intake passage P2 to form a flow passage communicable with one of the two individual intake passages P31 and P32 at each time. The valve shaft 256b of the intake control valve 256 is connected to the electric actuator 70 in such a manner as to rotate the valve body 256a around the rotation axis C. In consequence, the valve body 256a of the intake control valve 256 is rotated at least between locations where each of the two individual intake passages P3 is communicated with the common intake passage P2.

In this way, the positive pressure wave transmitting toward the cylinder 16 of # 1 or the cylinder 16 of # 2 through the common intake passage P2 results in reaching only the valve-valve passage P4 for either one of the cylinders 16. Therefore, it is possible to more effectively generate the air column vibration at the one cylinder 16 which is during the intake stroke.

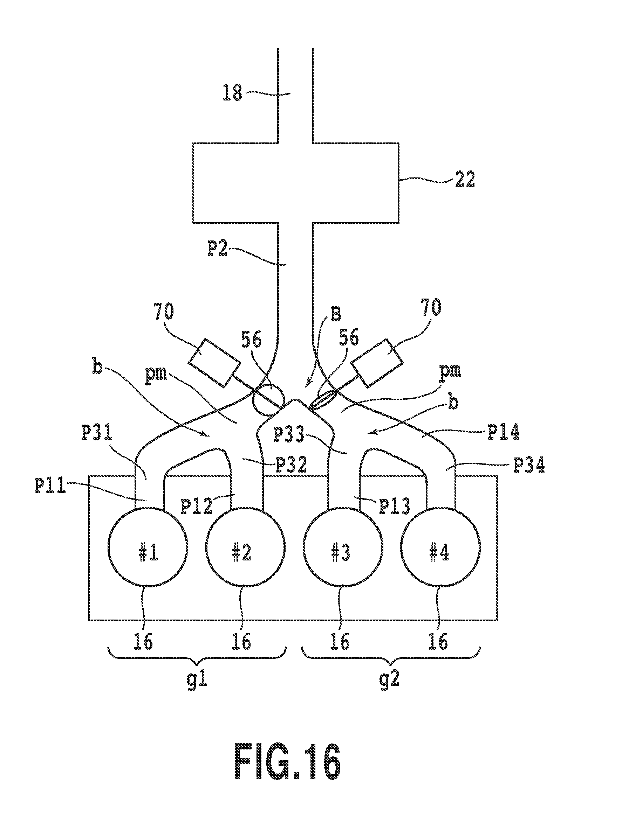

As described above, the one group may be configured of the two cylinders, but more cylinders 16 (for example, four cylinders) may be configured. Particularly in a case where the one group is configured of the cylinders more than two and the intake control valve 56 is provided in the boundary portion between the common intake passage P2 and the plural individual intake passages P3, the boundary portion may be configured to step-by-step branch in a branch shape from the upstream side toward the downstream side. An eleventh embodiment thus configured will be explained with reference to Fig. 16.

In the eleventh embodiment, since the four cylinders 16 are put together (divided) into one group G, the single common intake passage P2 and the four individual intake passages P3 are defined as described above. The one branch portion B as described above connected to the common intake passage P2 at the upstream side and two second branch portions b connected to the individual intake passages P3 at the downstream side are formed so that an intermediate branch passage pm is formed at a boundary portion between the common intake passage P2 and the four individual intake passages P3. The branch portion B may be called a first branch portion to the second branch portion b which is a part of the intake passage 18. Further, as described above, here, the intake passage extending between the branch portions is called "an intermediate branch passage" pm.

Here, a first small group g1 and a second small group g2 each are formed by cylinders 16 neighboring with each other included in one group G. The individual intake passages P3 of the two vibration intake passages P1 in regard to two cylinders in each of the small groups g1 and g2 are connected to the second branch portion b at the upstream side. The intermediate branch passage pm formed by the two vibration intake passages P1 in regard to the two cylinders 16 in the same small group g is connected to the upstream side of the second branch portion b. Therefore, the two individual intake passages P3 and the single intermediate branch passage pm are communicated through the second branch portion b. In the eleventh embodiment, since the one intermediate branch passage pm is formed in regard to each of the small groups g1 and g2, the two intermediate branch passages pm are finally formed. These two intermediate branch passages pm are connected to the branch portion B at the upstream side. Therefore, the two intermediate branch passages pm are communicated with the single common intake passage P2.

In addition, the intake control valve 56 as described above is provided in each of the two intermediate branch passages pm included in the boundary portion. In this way, only the one intake control valve 56 is commonly used in the two cylinders 16 in each small group g. FIG. 16 shows an event where the intake control valve 56 to the cylinder 16 of # 1 which is during the intake stroke is controlled to be opened, and the intake control valve 56 other than that, that is, the intake control valve 56 to the cylinders 16 of # 3 and # 4 is controlled to be closed.

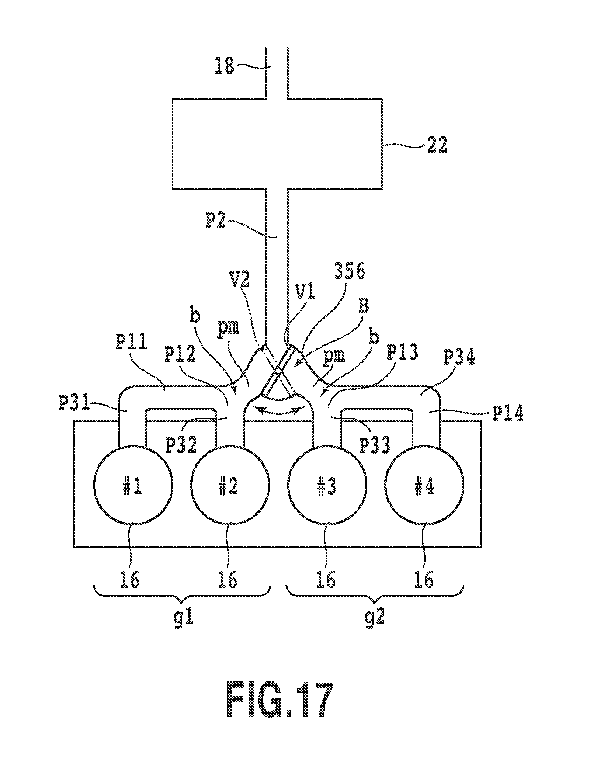

A twelfth embodiment which aims at further reduction of the number of the intake control valves 56 than the eleventh embodiment will be explained with FIGS. 17 and 18. In the twelfth embodiment, which is different from the eleventh embodiment, an intake control valve 356 is provided in the branch portion B formed between two intermediate branch passages pm and a single common intake passage P2 communicated therewith in the boundary portion between the common intake passage P2 and the plural individual intake passages P3. The intake control valve 356 is a three-way valve and is operated by the electric actuator (not shown in FIG. 17) controlled with an operational signal from ECU 60. The intake control valve 356 is operated to change between a valve position V1 and a valve position V2. FIG. 17 shows a state where the intake control valve 356 is positioned at the valve position V1. When the intake control valve 356 is positioned at the valve position V1, the vibration intake passages P11 and P12 to the cylinder 16 of # 1 and the cylinder 16 of # 2 are communicated (open), and the vibration intake passages P13 and P14 to the cylinder 16 of # 3 and the cylinder 16 of # 4 are blocked. In addition, when the intake control valve 356 is positioned at the valve position V2, the vibration intake passages P13 and P14 to the cylinder 16 of # 3 and the cylinder 16 of # 4 are communicated, and the vibration intake passages P11 and P12 to the cylinder 16 of # 1 and the cylinder 16 of # 2 are blocked.

FIG. 18 conceptually shows an example of an operation of the intake control valve 356 in the twelfth embodiment. FIG. 18 (a) conceptually shows a relation between an opening/closing position os1 of the intake control valve 356 at the time of performing the impulse charge and an opening/closing position os2 of the intake valve 28 at that time in each of the cylinders 16. In FIG. 18 (b), only the opening/closing position os1 of the intake control valve 356 shown in FIG. 18 (a) is extracted and lined up. FIG. 18 (c) shows an operating valve position of the intake control valve 356 in the twelfth embodiment for realizing the opening/closing position os1 of the intake control valve 356 shown in FIGS. 18 (a) and 18 (b). In FIGS. 18 (b) and 18 (c), the cylinder number of the cylinder 16 positioned during the intake stroke, which requires opening/closing of the intake control valve 356 for impulse charge, is shown to be surrounded by a broken line.

By controlling the single intake control valve 356 as shown in FIG. 18 (c), the impulse charge can be performed for each of the four cylinders 16. The number of switching times of the intake control valve 356 between the valve position V1 and the valve position V2 (refer to FIG. 18 (c)) is smaller than the number of switching times of the intake control valve 356 required at each of the cylinders 16 (refer to FIG. 18 (b)). Therefore, the number of times of controlling the electric actuator 70 used for an opening/closing operation of the intake control valve 356 is small. Accordingly, the energy of controlling the electric actuator 70 may be reduced to be small.

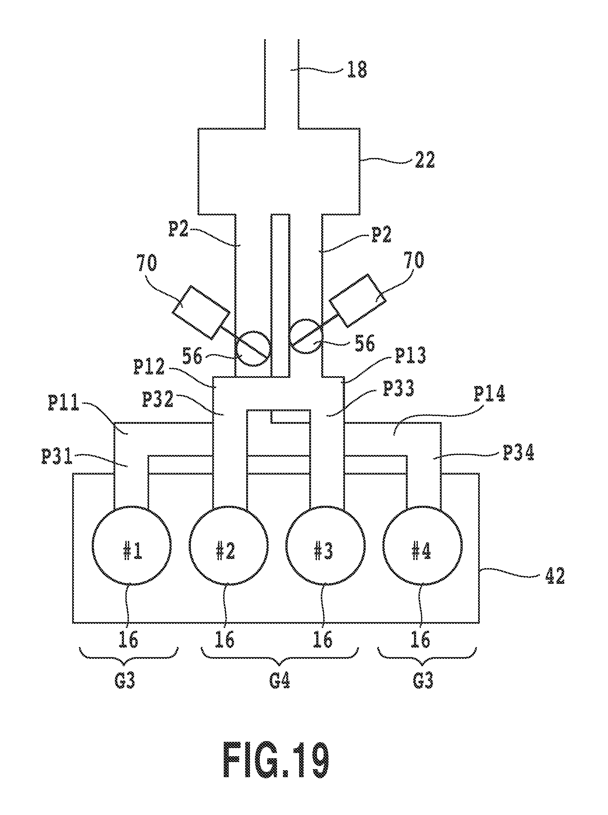

Next, a thirteenth embodiment will be explained with reference to FIG. 19. In the thirteenth embodiment, the four cylinders 16 are divided into groups G, each of which consists of cylinders having discontinuous timings of the intake stroke. Herein, the four cylinders 16 are divided into two groups of a third group G3 and a fourth group G4 each having two cylinders. The third group G3 is configured of the cylinder 16 of #1 and the cylinder 16 of #4 having discontinuous timings of the intake stroke, and the fourth group G4 is configured of the cylinder 16 of #2 and the cylinder 16 of #3 having discontinuous timings of the intake stroke. The single common intake passage P2 communicated with the surge tank 22 is formed in regard to each of the third group G3 and the fourth group G4. The thirteenth embodiment, which is different from the fifth embodiment, is configured so that the individual intake passages P3 associated with the single common intake passage P2 are communicated with the cylinders 16 having discontinuous timings of the intake stroke, further in other words, are communicated with the cylinders 16 having a large explosion interval in a crank angle. Since the internal combustion engine 10 in the thirteenth embodiment is an internal combustion engine of an in-line four-cylinder type, one group is configured of the two cylinders 16 in which an explosion interval is 360° at a crank angle therebetween. Since in the internal combustion engine 10 in the thirteenth embodiment, aspiration during the intake stroke and combustion of a mixture are periodically performed in the order of the cylinders of "#1, #3 #4, and #2", the two common intake passages P2 composed of the one common intake passage P2 by the vibration intake passage P11 corresponding to the cylinder 16 of # 1 and the vibration intake passage P14 corresponding to the cylinder 16 of # 4 and the one common intake passage P2 by the vibration intake passage P12 corresponding to the cylinder 16 of #2 and the vibration intake passage P13 corresponding to the cylinder of # 3 are formed. The one intake control valve 56 is provided in each of these common intake passages P2. It should be noted that the one intake control valve 56 is provided with the one electric actuator 70.

In this way, there is reduced the extent that the aspiration of any one cylinder 16 is influenced by the air column vibration generated in regard to the other cylinder 16, particularly the cylinder 16 which is during the intake stroke immediately before the one cylinder. Therefore, it is possible to more appropriately generate the intake charge efficiency of each cylinder 16. Further, since one intake control valve 56 is provided in regard to the two cylinders 16 of which an explosion interval is a crank shaft angle of 360° therebetween, the operation interval of the intake control valve 56 can be maximized. In consequence, the electric actuator 70 can be more appropriately operated.

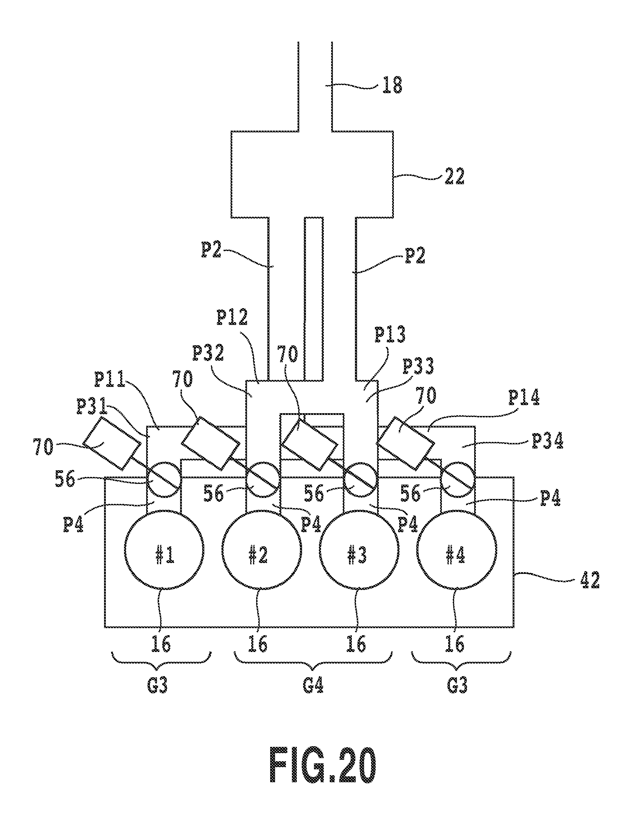

Next, a fourteenth embodiment which is a modified version of the thirteenth embodiment will be explained with reference to FIG. 20. In the fourteenth embodiment, which is different from the thirteenth embodiment, the intake control valve 56 is provided individually in each of the individual intake passages P1 corresponding to the four cylinders 16. In the fourteenth embodiment, the intake control valve 56 is provided in a location in the individual intake passage P3 which is defined by the intake port 26. In this way, a volume of the valve-valve passage P4 downstream of the intake control valve 56 corresponding to each cylinder 16 can be small. Therefore, it is possible to effectively generate the impulse charge.

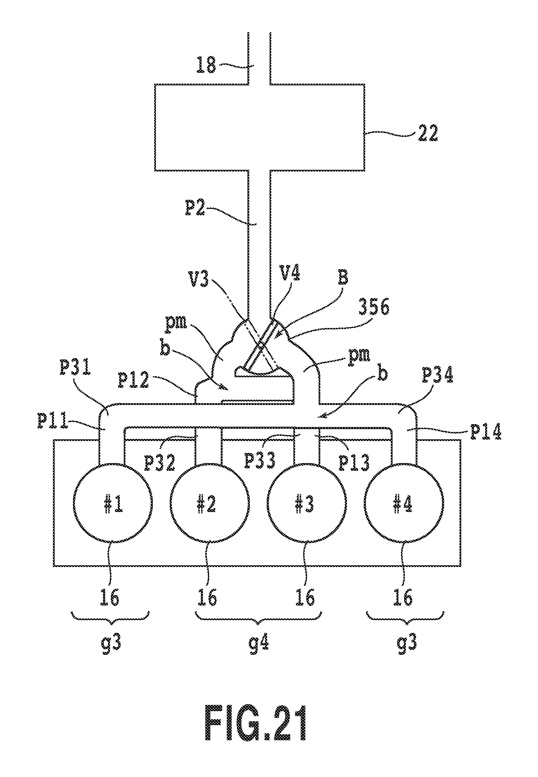

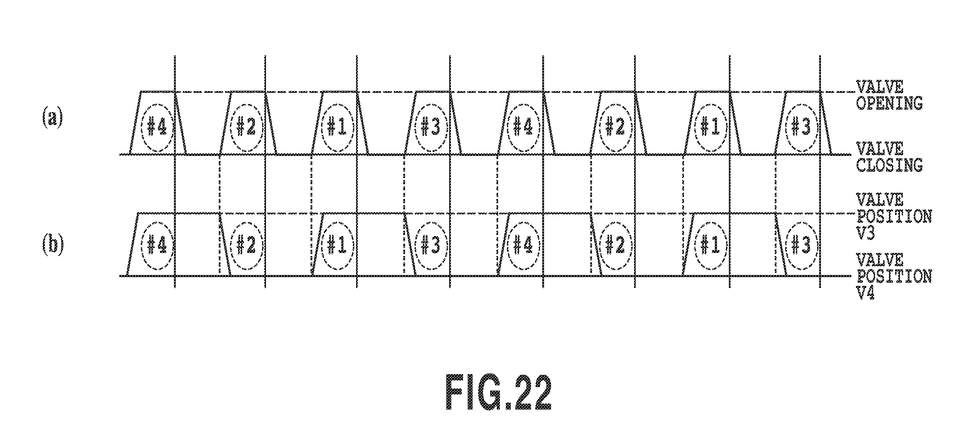

Next, a fifteenth embodiment will be explained with reference to FIGS. 21 and 22. In the fifteenth embodiment which is a modified version of the twelfth embodiment, for the same reason as that explained in the thirteenth and fourteenth embodiments, a small group g is formed in a unit of cylinders having discontinuous timings of the intake stroke. The four cylinders 16 in the fifteenth embodiment are put together into one group G and are divided into two small groups g. A third small group g3 is configured of the cylinder 16 of # 1 and the cylinder 16 of # 4 having discontinuous timings of the intake stroke, and a fourth small group g4 is configured of the cylinder 16 of # 2 and the cylinder 16 of # 3 having discontinuous timings of the intake stroke. The two individual intake passages P3 in regard to the two cylinders 16 in each of the small groups g3 and g4 are communicated through the second branch portion b with the intermediate branch passage pm at the upstream side. The two intermediate branch passages pm are communicated through the branch portion B with the single common intake passage P2 at the further upstream side. In addition, the intake control valve 356 is provided in the branch portion B formed between the two intermediate branch passages pm and the single common intake passage P2 communicated therewith in the boundary portion between the common intake passage P2 and the plural individual intake passages P3. The intake control valve 356 is a three-way valve which is the same as that explained in the twelfth embodiment and operated by the electric actuator (not shown) controlled with an operational signal from ECU 60. The intake control valve 356 is operated to change between a valve position V3 and a valve position V4. FIG. 21 shows a state where the intake control valve 356 is positioned at the valve position V4. When the intake control valve 356 is positioned at the valve position V3, the vibration intake passages P11 and P14 to the cylinder 16 of #1 and the cylinder 16 of #4 are communicated, and the vibration intake passages P12 and P13 to the cylinder 16 of #2 and the cylinder 16 of #3 are blocked. In addition, when the intake control valve 356 is positioned at the valve position V4, the vibration intake passages P12 and P13 to the cylinder 16 of # 2 and the cylinder 16 of # 3 are communicated, and the vibration intake passages P11 and P14 to the cylinder 16 of # 1 and the cylinder 16 of # 4 are blocked.

FIG. 22 conceptually shows an example of an operation of the intake control valve 356 in the fifteenth embodiment. The graph in FIG. 22 (a) is the same as the graph in FIG. 18 (b), and in FIG. 22 (a), only opening/closing positions os1 of the intake control valve 356 during an intake stroke at the time of performing the impulse charge in regard to each of the cylinders 16 are extracted and lined up. FIG. 22 (b) shows operating valve positions of the intake control valve 356 in the fifteenth embodiment for realizing the opening/closing positions os1 of the intake control valve 356 shown in FIGS. 22 (a). In FIGS. 22 (a) and 22 (b), the cylinder number of the cylinder 16 positioned during the intake stroke, which requires the opening/closing of the intake control valve 356 for impulse charge, is shown to be surrounded by a broken line.

By controlling the single intake control valve 356 as shown in FIG. 22 (b), the impulse charge can be performed for each of the four cylinders 16. The number of switching times of the intake control valve 356 between the valve position V3 and the valve position V4 (refer to FIG. 22 (b) is smaller than the number of switching times of the intake control valve 356 required at each of the cylinders 16 (refer to FIG. 22 (a)). Therefore, the number of times of controlling the electric actuator 70 used for the opening/closing operation of the intake control valve 356 may be made small.

In FIG. 19 to FIG. 21, the passage lengths L1 of the two vibration intake passages P1 corresponding to the two cylinders 16 belonging to one group (or small group) are illustrated to be different. However, the passage lengths may be equal. In addition, all of the individual intake passages P3 in each of the thirteenth, fourteenth and fifteenth embodiments may be formed in the cylinder head 42.

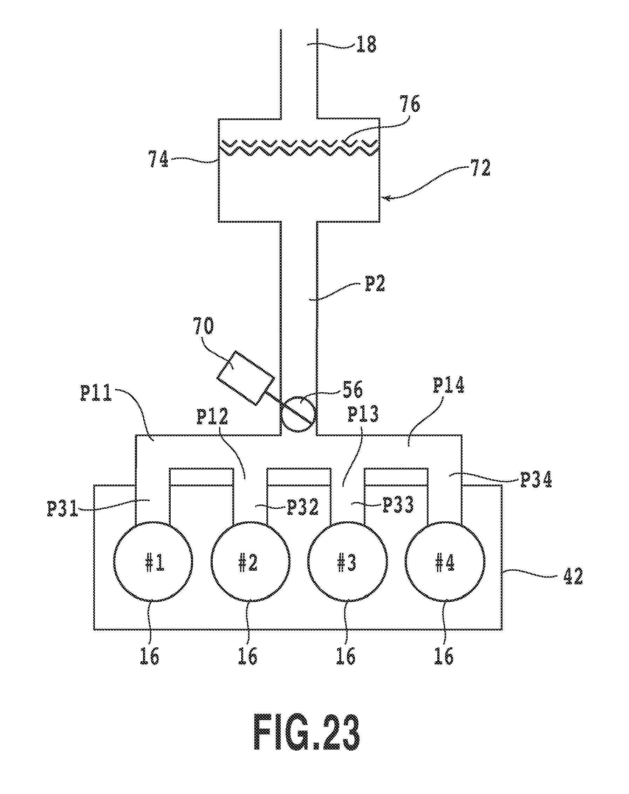

Next, a sixteenth embodiment will be explained with reference to FIG. 23. In the internal combustion engine 10 in each of the first embodiment to fifteenth embodiment, the air cleaner 19 is provided upstream of the surge tank 22. Generally the air cleaner 19 itself has a large occupation rate in the intake system. The surge tank 22 likewise has a large occupation rate in the intake system. In each of the first embodiment to the fifteenth embodiment, the surge tank 22 serves to form an open end for converting the negative pressure wave into the positive pressure wave in the air column vibration. In consideration of the above matters, in the sixteenth embodiment, for downsizing the whole intake system, the surge tank 22 and the air cleaner 19 are configured to be put together.

In FIG. 23, a member which functions as both the surge tank 22 and the air cleaner 19 is shown as a filter member 72. The filter member 72 is configured of an enlarged box portion 74 having a cross section area larger than a cross section area of any location of the intake passage 18 downstream of the filter member 72 and a filter element 76 provided in the enlarged box portion 74 for removal of dusts or the like. The filter member 72 effects a function of the air cleaner 19 for removing dusts or the like by the filter element 76 and effects a function of the surge tank 22 for reducing disturbance of air taken in the intake passage 18 by the enlarged box portion 74. Further the filter member 72 also plays a role of forming the intake passage downstream of the filter member 72, that is, the upstream open end of the vibration intake passage P1.

The filter member 72 configured in this way can be considered as a member in which the filter element 76 is provided in the surge tank 22 for making the surge tank 22 effect the function of the air cleaner 19. Alternatively, the filter member 72 can be considered also as a member for making the air cleaner 19 effect the function of the surge tank 22.

In a case where as in the case of the ninth to twelfth embodiments and the fifteenth embodiment, the intake control valve is provided in the boundary portion between the common intake passage P2 and the individual intake passage P3, the intake control valve is provided in a branch portion of the boundary portion or the intermediate branch passage thereof. When the intake control valve is provided in the branch portion of the boundary portion, for example, in the branch portion (or the first branch portion) B or in the second branch portion b, the intake control valve may be a three-way valve or a valve which enables communication of two arbitrary passages among three or more passages communicated with and around the valve, and the blocking or the closing of the other passage. It should be noted that when the boundary portion is provided with the first branch portion, the second branch portion, the third branch portion and so on, the intake control valve may be provided in the branch portion as one of the ranks thereof. However, it should be understood that only one intake control valve is provided in the vibration intake passage P1 corresponding to any cylinder. When the intake control valve is provided in the boundary portion in this way, an appropriate flow of air can be produced in the vibration intake passage P1 corresponding to an intake stroke of each cylinder during the intake stroke. Further, since the single intake control valve is commonly used in the plural cylinders by doing so, reduction of the numbers of the intake control valves or the like can be achieved.

In the first embodiment to the sixteenth embodiment, the number of the intake port in regard to the one cylinder 16 is set to one, but the number of the intake ports may be plural ones such as two, three. That is, the internal combustion engine to which the present invention is applied may include an engine with two valves, three valves, four valves or five valves. However, in a case where plural intake ports 26 are provided in the one cylinder 16, a passage length L1 of the vibration intake passage P1 can be defined by setting a position of the intake valve 28 in either one of the intake ports 26 corresponding to each other between the respective cylinders 16, as a reference point. For example, either one of the intake ports 26 corresponding to each other between the respective cylinders 16 is a helical port in regard to each cylinder 16. Further, in a case where the plural intake ports 26 are provided in the one cylinder 16, the passage length L1 of the vibration intake passage P1 can be defined by setting an average position of the intake valves 28 in the intake ports 26, as a reference point. For example, in a case where the two intake ports 26 are provided in regard to the one cylinder 16, an average value of a length from a position of the intake valve 28 in each intake port 26 to the downstream end of the surge tank is defined as the passage length L1 of the vibration intake passage P1.

A cross section area of any location of each vibration intake passage P1 in each of the above various kinds of the embodiments may be substantially equal. Preferably within a range of the vibration intake passage P1, a cross section of any location thereof to a cross section area of the other location thereof formed by the intake port 26 is in a range of 0.8 to 1.2 times. However, as described above, in a case where the plural intake ports 26 are provided in regard to the one cylinder 16, a sum of respective cross section areas of the plural intake ports 26 to the one cylinder 16 is defined as a cross section area of a location formed by the intake port 26 within a range of the vibration intake passage P1. In this way, the damping of the air column vibration generated in the vibration intake passage P1 is restricted. In addition, a passage length of each individual intake passage P3 may be twice to sixth times a cross sectional diameter of the intake port 26.

According to each of the first to sixteenth embodiments, as already explained, when the intake control valve 56, 156 or 256 is controlled to be opened/closed at the opening/closing timing set to correspond to the passage length of the intake passage in each cylinder 16, the intake charge efficiency in each cylinder at the same operating state can be substantially equal between all of the cylinders 16. In this way, it is also possible to realize various intake charge efficiencies in accordance with various operating states. Therefore, downsizing of the intake manifold 24 can be performed. This means that the intake manifold 24 of each of the various kinds of the embodiments is small as compared to the conventional intake manifold. That is, according to the present invention, the downsizing of the intake system can be carried out.

In each of the above-mentioned embodiments, the present invention is applied to the diesel engine, but the present invention is advantageous in other types of internal combustion engines such as a gasoline engine of an in-cylinder direct injection type or a port injection type, further an internal combustion engine using gaseous fuel and a two-cycle engine, which can obtain the same effect as in the case of each of the aforementioned embodiments without mentioning. The present invention may be, besides a natural intake type internal combustion engine, applied to an internal combustion engine with a turbocharger. Further, the present invention may be applied to an internal combustion engine with a so-called throttle valve upstream of the intake control valve. In addition, the present invention may be applied to an internal combustion engine with an exhaust gas recirculation (EGR) system. The embodiments in regard to the in-line four-cylinder type internal combustion engine are explained, but the present invention may be, as long as the internal combustion engine has two or more cylinders, applied to the internal combustion engine with any cylinder numbers, any arrangement of cylinders or the like.

Incidentally it is desirable that appropriately estimating or considering an air quantity flowing into the cylinder 16 for every cylinder cycle in each control of the various kinds of the internal combustion engines, a fuel injection quantity, a fuel injection timing or the like is set based upon the estimated or considered air quantity. In a case of each of the various kinds of the internal combustion engines adopting the intake control valve 56, 156, 256 or 356, for example, at the time of performing the impulse charge, a flowing air quantity can change in accordance with an operation timing of the intake control valve for every intake cycle. Therefore, at the time of performing the impulse charge, an intake air quantity found by a method of simply using a detection value of the air flow meter or the like provided upstream of the intake control valve can not follow a change of the air quantity for every intake cycle, and as a result, with this method, the air quantity aspired into the cylinder can not be accurately measured. In other words, according to the method of simply using the detection value of this air flow meter, an averaging air quantity flowing into the cylinder can be only estimated, and a variation quantity in a case where the air quantity changes by a unit of an intake cycle can not be estimated. In addition, according to the method of simply using the detection value of the air flow meter, even a change in an averaging flow quantity in a case where the intake control valve changes from a non-operating state to an operating state or in the opposite direction can not be followed. Accordingly, a fuel injection system and a method which appropriately allows a fuel injection into the cylinder 16 even in the middle of operating the intake control valve such as at the time of performing the impulse charge will be explained hereinafter.

A plurality of fuel injection control patterns hereinafter explained in regard to the seventeenth to twenty-first embodiments each can be used as the fuel injection control in each of the various kinds of the internal combustion engines explained above based upon the first to sixteenth embodiments. It should be noted that in the following explanation, components which are the same as or identical to those explained before are referred to as the same codes and the explanation is omitted.

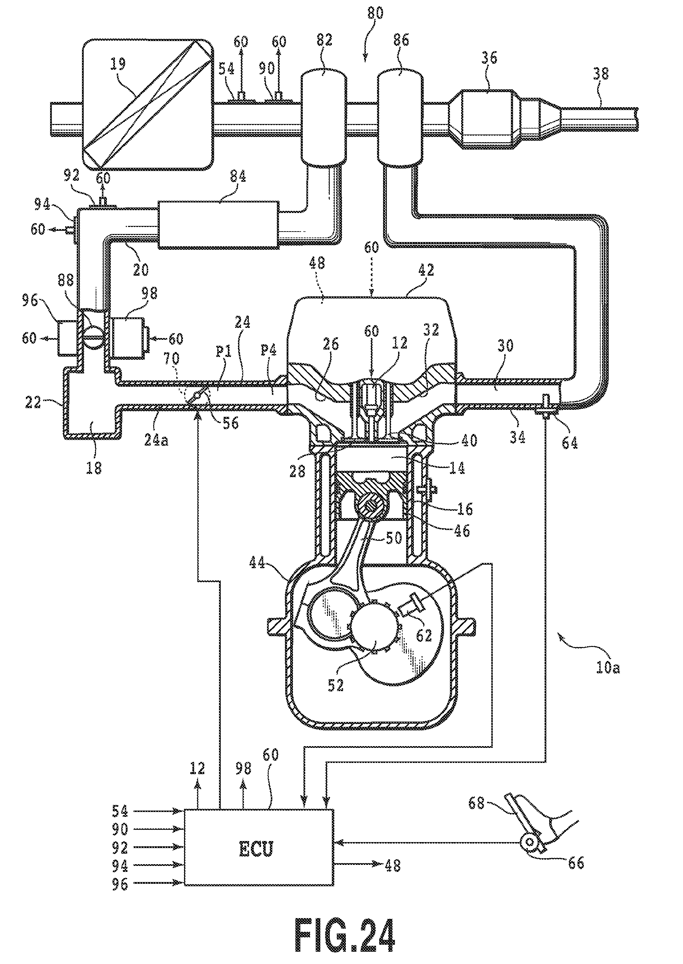

A fuel injection control as an example here will be explained in an internal combustion engine in the seventeenth embodiment. FIG. 24 is a schematic diagram showing an internal combustion engine system for a vehicle to which the seventeenth embodiment is applied.

An internal combustion engine 10a in FIG. 24 has the configuration generally similar to that of the internal combustion engine 10 in the first embodiment, explained based upon FIGS. 1 and 2. However, a turbocharger is provided in the internal combustion engine 10a and also a throttle valve is provided in an intake passage thereof. Further, the kind and the number of sensors provided in the internal combustion engine 10a in the seventeenth embodiment are different from those in the first embodiment. Therefore, the configuration of the internal combustion engine 10a in the seventeenth embodiment will be briefly explained focusing on a point different from the configuration of the internal combustion engine in the first embodiment, and thereafter, the fuel injection control in the internal combustion engine 10a will be explained. It should be noted that the internal combustion engine 10a is an in-line four-cylinder type internal combustion engine, wherein only the one intake control valve 56 common to four cylinders 16 is provided in the one common intake passage P2.

The intake passage 18 in the internal combustion engine 10a is defined mainly by the air cleaner 19, the intake pipe 20, the surge tank 22, the intake manifold 24 and the intake port 26 connected with each other. A compressor 82 in a turbocharger 80 is arranged between the air cleaner 19 and the surge tank 22 and an intercooler 84 is provided downstream of the compressor 82. On the other hand, the exhaust passage 30 is defined mainly by the exhaust port 32, the exhaust manifold 34, the catalyst 36 and the exhaust pipe 38 connected with each other. Further, a turbine 86 in the turbocharger 80 is arranged.

A turbine wheel of the turbine 86 is rotationally driven by an exhaust gas. A compressor wheel of the compressor 82, which is coaxially connected to the turbine wheel through a rotational shaft, is rotated by a rotational force of the turbine wheel. That is, the internal combustion engine 10a is an internal combustion engine with a turbocharger provided with the turbocharger 80 including the turbine 86 taking out exhaust energy and the compressor 82 for performing the supercharge by the exhaust energy taken out by the turbine 86.

Further, a throttle valve 88 is also provided in the intake passage 18 for the internal combustion engine 10a. The throttle valve 88 is provided in the intake passage 18 so as to be positioned upstream of the intake control valve 56 and upstream of the surge tank 22.

In the internal combustion engine, the above pressure sensor 58 may be provided for detecting a pressure in the intake passage downstream of the intake control valve 56, but here, is not provided. In regard to sensors, the air flow meter 54 and an intake temperature sensor 90 are provided downstream of the air cleaner 19 and upstream of the compressor 82, and a pressure sensor 92 and a temperature sensor 94 are provided between the compressor 82 and the surge tank 22. Each of the pressure sensor 92 and the temperature sensor 94 is a sensor common to all of the cylinders 16. Further, a throttle positioning sensor 96 is provided for detecting an opening of the throttle valve 88. It should be noted that the oxygen concentration sensor 64 and the crank angle sensor 62 are also provided. Detection signals from these sensors are outputted to and received into ECU 60. ECU 60 performs various calculations based upon these output signals and controls the injector 12, the actuator 70 for driving the intake control valve 56, the valve-operating mechanism 48, the actuator 98 for driving the throttle valve 88, and the like, thus appropriately operating or driving the internal combustion engine 10a.

However, here, when the operating state is in an impulse charge operating region, the control for impulse charge is performed. Specially the impulse charge operating region is a high-load operating region, more preferably an operating region where an engine rotational speed is a low/middle rotational speed and an engine load is a high load. As the control for the impulse charge, the intake control valve 56 is operated as described in detail in the first embodiment. In the same way as already explained, the opening/closing timing of the intake control valve 56 for the impulse charge is set to correspond to the passage length of each vibration intake passage P1. In addition, when the operating state is in an operating region other than that (non-impulse charge operating region), the control for non-impulse charge is performed. As the control for the non-impulse charge, herein, the intake control valve 56 is controlled to be maintained in a fully opened state. For determining this operating state, ECU 60 has ROM where a map or a calculation formula therefor is in advance stored.

The fuel injection control for the internal combustion engine 10a is performed in consideration of an air quantity aspired into each cylinder 16, that is, each combustion chamber 14 during an intake stroke of each cylinder 16. Here, ECU 60 once finds an air quantity aspired into each cylinder 16 during the intake stroke, and then does not perform a fuel injection control for each cylinder 16 based upon the found air quantity, but schematically ECU 60 performs the fuel injection control using a parameter having a correlation with the air quantity aspired into each cylinder 16. In this way, ECU 60 performs the fuel injection control appropriately relating to the air quantity aspired into each cylinder 16. That is, ECU 60 performs the fuel injection control to the cylinder 16 using the parameter having the correlation with the air quantity aspired into each cylinder 16 in such a manner as to appropriately inject into the cylinder 16 downstream of the intake control valve 56 a fuel having the quantity corresponding to the air quantity aspired into the cylinder 16 during the intake stroke. Hereinafter, such fuel injection control will be explained.

ECU 60 performs a separate fuel injection control in regard to each of four cylinders 16. This is because for example, a length of the vibration intake passage P1 to each cylinder 16 differs with each other. Specifically this means that between various calculations hereinafter described in detail, correction coefficients, data, calculation formulas or the like used in regard to the respective cylinders 16 differ slightly with each other, but does not means that the calculation methods themselves or the like differ between the cylinders 16. Therefore, hereinafter, any one cylinder 16 will be explained and an explanation of the other cylinder 16 is omitted.

However, an intake control valve controller is configured to include a part of ECU 60 and the electric actuator 70, and each of air quantity estimating means and a fuel injection controller is configured to include a part of ECU 60. It should be noted that in detail, herein, the air quantity estimating means is included in the fuel injection controller, but may be separated independently from the fuel injection controller and be associated therewith.

ECU 60 finds four different fuel injection quantities in each cylinder 16 for each cylinder cycle at each time and defines the minimum injection quantity among them as a fuel injection quantity to be executed (execution fuel injection quantity) Qf. A fuel injection period is defined based upon this set fuel injection quantity. The injector 12 is controlled so as to open from a fuel injection start timing to a fuel injection finish timing set in this way.

The four injection quantities are composed of a first injection quantity Qb, a second injection quantity Qa, a third injection quantity Qe and a fourth injection quantity Qpm. The first injection quantity Qb is a fuel injection quantity to be required for a requirement load or requirement torque. Here, an accelerator opening is used as a factor for determining the requirement load. Therefore, ECU 60 retrieves data which is in advance defined by an experiment and stored in ROM, based upon the engine rotational speed and the accelerator opening obtained at that time or calculates them using the calculation formula to calculate the first injection quantity Qb. It should be noted that the data and the calculation formula are defined so that the first injection quantity Qb becomes a quantity substantially corresponding to an air quantity in a steady state.

The second injection quantity Qa is a fuel injection quantity calculated to an air quantity detected using an output signal from the air flow meter 54. Specifically ECU 60 retrieves data which is in advance defined by an experiment and stored in ROM, based upon an engine rotational speed and an air quantity obtained using the air flow meter 54 or calculates them using the calculation formula to calculate the second injection quantity Qa. It should be noted that the second injection quantity Qa is an upper limit injection quantity defined based upon an air quantity flowing into the intake passage 18.

The third injection quantity Qe is an upper limit injection quantity defined based upon performance of the internal combustion engine 10. Here, the third injection quantity Qe is set as a constant and this value is defined based upon performance of the injector 12. That is, the injector 12 for the internal combustion engine 10a can appropriately inject only the third injection quantity Qe at a maximum during a compression stroke. Here, the third injection quantity Qe is in advance stored in ROM and is read as needed.

The fourth injection quantity Qpm is a fuel injection quantity substantially corresponding to an air quantity aspired into the combustion chamber 14 during an intake stroke at that time. That is, the fourth injection quantity Qpm is a fuel injection quantity in consideration of an operating state of the intake control valve 56. More specifically in a case of performing the impulse charge by opening the intake control valve 56 one time and closing the intake control valve 56 one time in regard to one intake stroke as described above, the fourth injection quantity Qpm is a fuel injection quantity in consideration of an opening/closing timing of the intake control valve 56 or the like, and in a case of not performing the impulse charge, the fourth injection quantity Qpm is a fuel injection quantity in consideration of maintaining an opening of the intake control valve 56, that is, a non-operation thereof. ECU 60, first, calculates a basic injection quantity Qp and a correction coefficient Rip and calculates the fourth injection quantity Qpm as a product thereof (Qp × Rip). The correction coefficient Rip at the time of performing the impulse charge is calculated by retrieving data found in advance by an experiment and stored or computing it by a computing formula, based upon the engine rotational speed and the operating state of the intake control valve 56 at that time. The operating state of the intake control valve 56 includes presence/absence of an operation of the intake control valve 56, and an opening timing (opening timing for impulse charge) and a closing timing (closing timing for impulse charge) of the intake control valve 56 in regard to an intake stroke at the time of performing the impulse charge. However, the closing timing of the intake control valve 56 can be replaced by an opening period (opening period for impulse charge) of the intake control valve 56. The operating state of the intake control valve 56 may also include an operation speed of the intake control valve 56. However, for more appropriately estimating or considering an air quantity aspired into the cylinder 16, the data or the computing formula for finding the correction coefficient Rip is defined for each cylinder 16 based upon a configuration characteristic of the vibration intake passage P1 which has a passage length contributing to generation of an air column vibration and in which the intake control valve 56 is provided. However, at the time of not performing the impulse charge, that is, when the operating state is not in an impulse charge operating region, the correction coefficient Rip is set to "1". The basic injection quantity Qp for finding the fourth injection quantity Qpm is calculated by retrieving data in advance found by an experiment and stored or computing it by a computing formula, based upon a pressure at the outlet side of the compressor 82, that is, the pressure detected based upon an output signal from the pressure sensor 92 and the engine rotational speed. It should be noted that at the time of calculating the basic injection quantity Qp, the correction may be made based upon a temperature of air detected based upon an output signal from the temperature sensor 94. This is because the air quantity aspired into the cylinder 16 can change by this temperature.

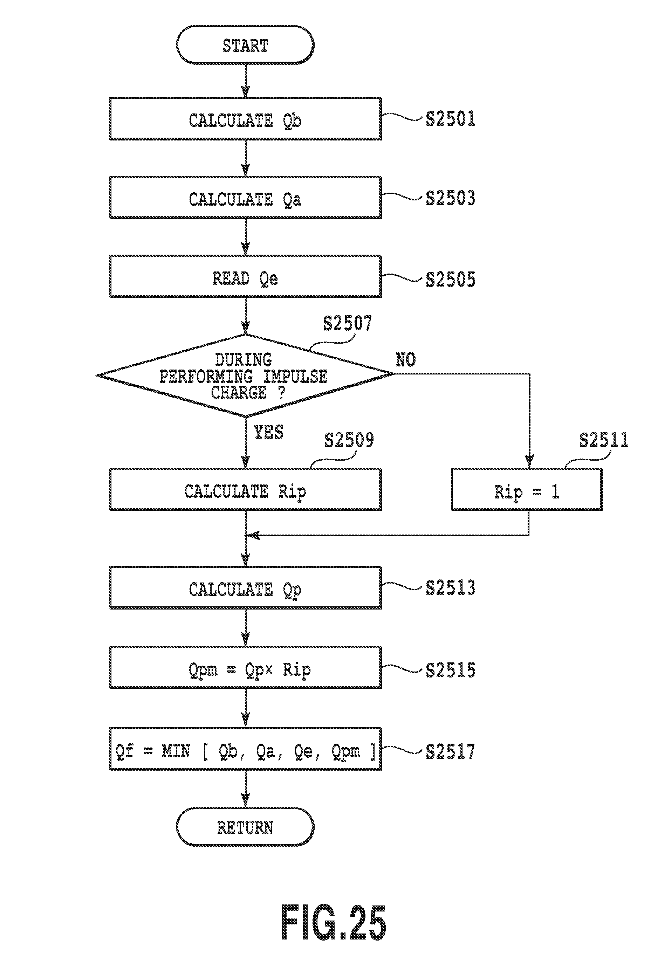

Here, a determination of the execution fuel injection quantity Qf from such four fuel injection quantities according to the seventeenth embodiment will be explained with reference to a flow chart in FIG. 25. The flow chart in FIG. 25 is repeated every several ten ms, preferably every intake stroke for each cylinder 16. That is, ECU 60 determines a fuel injection quantity in a cylinder cycle of each cylinder 16 according to the flow chart shown in FIG. 25.

First, ECU 60 calculates the first injection quantity Qb at step S2501, calculates the second injection quantity Qa at next step S2503, and further at step S2505 reads in the third injection quantity Qe. At step S2507, ECU 60 determines whether or not the impulse charge is being performed. Here, the determination is made on whether or not the operating state is in the above impulse charge operating region. When the positive determination is made, that is, when it is determined that the impulse charge is being performed, the correction coefficient Rip is calculated at step S2509. On the other hand, when it is determined that the negative determination is made at step S2507, "1" is set as the correction coefficient Rip at step S2511. When step S2509 or step S2511 is executed, the basic injection quantity Qp is calculated at step S2513. At next step S2515, the fourth injection quantity Qpm is calculated. When the first injection quantity Qb, the second injection quantity Qa, the third injection quantity Qe and the fourth injection quantity Qpm thus obtained are compared at step S2517, the minimum injection quantity among them is set as the execution fuel injection quantity Qf.

When the execution fuel injection quantity Qf is determined, ECU 60 retrieves a map (not shown) or does based upon the execution fuel injection quantity Qf to determine a fuel injection period, specifically a fuel injection start timing and the finish timing. As a result, the injector 12 is controlled based upon these timings.

It should be noted that the flow chart in FIG. 25 shows the order for simply finding each injection quantity, and various values for finding each injection quantity, for example, an engine rotational speed, an accelerator opening and the like can be detected for each repetition of the routine to be changed into the update values. The detection of such various values or the like is likewise made in flow charts of the other embodiments to be described later.

In each cylinder 16, the fuel injection is made from the injector 12 using the minimum value among the four fuel injection quantities thus obtained. Therefore, in each cylinder 16, the injected fuel quantity does not become excessive to the air quantity aspired into the combustion chamber 14. Particularly in this way, it is possible to inject and supply the fuel of a more appropriate quantity into the combustion chamber 14 at a transient period to an impulse charge execution or at the reverse transient period. Therefore, not only at a steady period but also at the transient period, it is possible to prevent deterioration of exhaust emissions and at the same time appropriately achieve a torque increase through an increase of an intake air quantity by the impulse charge.

Next, a different fuel injection control will be explained in an internal combustion engine in an eighteenth embodiment. Since an internal combustion engine system for a vehicle to which the eighteenth embodiment is applied is generally the same as that of the seventeenth embodiment shown in FIG 24, the explanation is omitted herein.

The fuel injection control in the eighteenth embodiment is the same as the fuel injection control in the seventeenth embodiment in a point of using the minimum injection quantity among the first injection quantity Qb, the second injection quantity Qa, the third injection quantity Qe and the fourth injection quantity Qpm of four injection quantities, as the execution fuel injection quantity Qf. However, a method of finding the fourth injection quantity Qpm in the eighteenth embodiment is different from that of the fourth injection quantity in the seventeenth embodiment. Accordingly here, calculation of the fourth injection quantity Qpm in the eighteenth embodiment will be first explained. It should be noted that hereinafter, any one cylinder 16 will be explained and an explanation in regard to the other cylinder 16 may be omitted.

In the fuel injection control in the eighteenth embodiment, as in detail described hereinafter, a temperature in the intake passage downstream of the intake control valve 56 is further considered. Since at the time of performing the impulse charge, an intake pulsation is generated in the intake passage to increase a pressure variation of air in the combustion chamber 14, conversion from kinetic energy of the air into thermal energy thereof is generated to relatively largely increase a temperature of the aspired air. Since an increasing temperature of air changes a volume of the air, it is possible to more appropriately perform the fuel injection control adapted for an air quantity aspired into the combustion chamber 14, by considering such a temperature.

ECU 60 finds the basic injection quantity Qp, the first correction coefficient Rip and the second coefficient Rit to calculate the fourth injection quantity Qpm as a product thereof (Qp × Rip × Rit). The basic injection quantity Qp and the first correction coefficient Rip respectively are the same as the basic injection quantity Qp and the correction coefficient Rip in the seventeenth embodiment. The second correction coefficient Rit is a correction coefficient defined based upon an increasing degree ΔT of an air temperature due to the impulse charge. The increasing degree ΔT is a value found by subtracting an air temperature at the downstream outlet of the intercooler 84 as the outlet side of the compressor 82 from an air temperature in the combustion chamber 14 at a point where the intake valve 28 is closed during an intake stroke. Therefore, in a case where a temperature sensor is provided for directly detecting a temperature in the intake passage downstream of the intake control valve 56, the increasing degree ΔT is found directly from a temperature detected using the temperature sensor and a temperature detected using the temperature sensor 94. However, here the increasing degree ΔT is estimated based upon an engine rotational speed and an engine load. As the engine load, the first injection quantity Qb is used. The increasing degree ΔT is calculated by retrieving data in advance found by an experiment and stored or calculating it using a computing formula, based upon the first injection quantity Qb and the engine rotational speed. The second correction coefficient Rit is calculated by retrieving the data in advance found and stored or doing by this increasing degree ΔT. However, at the time of not performing the impulse charge, that is, when the operating state is not in the impulse charge operating region, both the first and second correction coefficients Rip and Rit are set as "1".

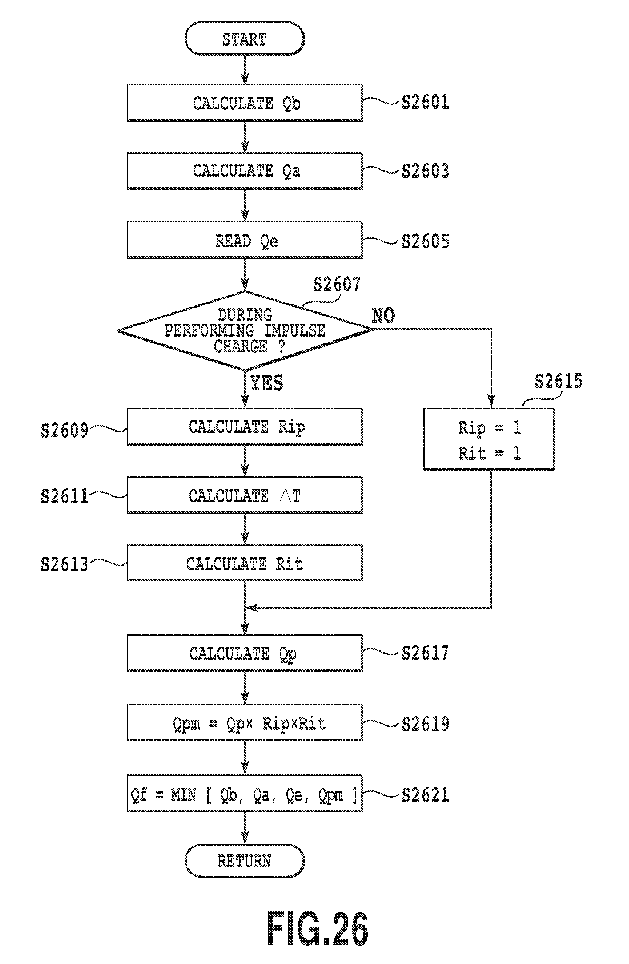

Here, a flow of determination of the execution fuel injection quantity Qf in the eighteenth embodiment will be explained with reference to a flow chart in FIG. 26. It should be noted that the flow chart in FIG. 26 is repeated for every several tens ms, preferably every intake stroke in each cylinder 16. However, each of steps S2601 to S2609, S2617 and S2621 in FIG. 26 is the same as each of steps S2501 to S2509, S2513 and S2517 in FIG. 25.

ECU 60 finds the first injection quantity Qb, the second injection quantity Qa and the third injection quantity Qe at steps S1601 to S2605 respectively. When a positive determination is made at step S2607, the first correction coefficient Rip is calculated at step S2609 and the process goes to step S2611. At next step S2611 the increasing degree ΔT is calculated and at next step S2613 the second correction coefficient Rit is calculated. On the other hand, when a negative determination is made at step S2607, both the first and second correction coefficients Rip and Rit are set as "1" at step S2615. When step S2613 or step S2615 is executed, the basic injection quantity Qp is calculated at step S2617 and at next step S2619 the basic injection quantity Qp is multiplied by the first and second correction coefficients Rip and Rit to calculate the fourth injection quantity Qpm. At step S2621 the minimum injection quantity among the four fuel injection quantities is set as the execution fuel injection quantity Qf. As a result, in the same way as the explanation in the seventeenth embodiment, the fuel injection period is found and the injector 12 is controlled based upon this fuel injection period.

Since the fuel injection from the injector 12 is made using the minimum value of the four fuel injection quantities thus obtained, the effect similar to that described in the seventeenth embodiment is achieved. In addition to it, since the execution fuel injection quantity Qf is determined based upon the temperature in the intake passage downstream of the intake control valve 56 as described above, it is possible to more appropriately achieve the fuel injection control.

Next, a further different fuel injection control will be explained herein in an internal combustion engine in a nineteenth embodiment. An internal combustion engine system for a vehicle to which the nineteenth embodiment is applied is generally the same as that in the seventeenth embodiment shown in FIG. 24, but differs in a point that a pressure sensor for measuring an intake passage pressure is provided in the common intake passage P2 in a position downstream of the intake control valve 56. Since this pressure sensor is an equivalent to the pressure sensor 58 in the first embodiment, it is referred to as a code "58". The other explanation in the internal combustion engine system in the nineteenth embodiment is omitted.

In the fuel injection control in the nineteenth embodiment, a pressure in the intake passage downstream of the intake control valve 56 is considered as in detail described hereinafter. At the time of performing the impulse charge, a pressure variation in the intake passage or the like is increased caused by an intake pulsation, that is, a pressure pulsation due to an opening/closing operation of the intake control valve 56. The pressure in the intake passage downstream of the intake control valve 56 has a close relation with a pressure in the combustion chamber 14, and particularly the pressure in the intake passage downstream of the intake control valve 56 when the intake valve 28 is closed is generally equal to that in the cylinder 16 when the intake valve 28 is closed. Therefore, considering the pressure in the intake passage downstream of the intake control valve 56 is equal to considering an operating state of the intake control valve 56, and it is possible to appropriately estimate an air quantity aspired into the combustion chamber 14 as a result of this consideration. Therefore, by consideration of this pressure, it is possible to more appropriately perform the fuel injection control adapted for the air quantity aspired into the combustion chamber 14.

The fuel injection control in the nineteenth embodiment is the same as the fuel injection control in each of the seventeenth and eighteenth embodiment in a point of using the minimum injection quantity among the first injection quantity Qb, the second injection quantity Qa, the third injection quantity Qe and the fourth injection quantity Qpm of four injection quantities as the execution fuel injection quantity Qf. However, a method of finding the fourth injection quantity Qpm is different from that in each of the seventeenth and eighteenth embodiments. Accordingly here, calculation of the fourth injection quantity Qpm in the nineteenth embodiment will be first explained. It should be noted that hereinafter, any one cylinder 16 will be explained and an explanation in regard to the other cylinder 16 may be omitted.

ECU 60, at the time of not performing the impulse charge, that is, when the operating state is not in the impulse charge operating region, the above basic injection quantity Qp is calculated based upon a pressure pii at the outlet side of the compressor 82 (compressor outlet pressure) detected based upon an output signal from the pressure sensor 92, which is defined as the fourth injection quantity Qpm. On the other hand, in the middle of performing the impulse charge, ECU 60 first detects a pressure (port pressure) pip downstream of the intake control valve 56 using the pressure sensor 58. However, this port pressure pip is preferably a pressure at the time of closing the intake valve 28. Therefore, the pressure sensor 58 is a sensor with high response. ECU 60 calculates the fourth injection quantity Qpm by retrieving data in advance found by an experiment and stored or calculating it using a computing formula, based upon the detected port pressure pip and an engine rotational speed.

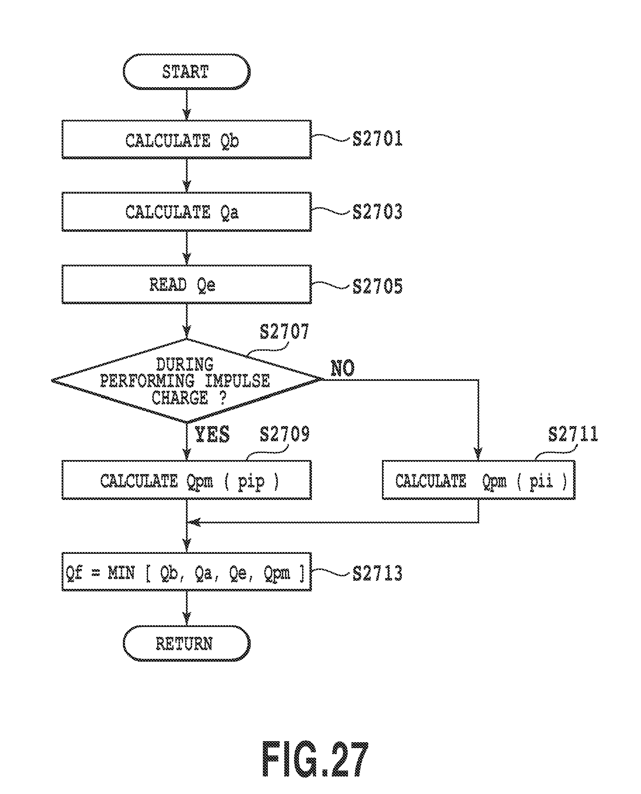

Here, a flow of determination of the execution fuel injection quantity Qf in the nineteenth embodiment will be explained with reference to a flow chart in FIG. 27. It should be noted that the flow chart in FIG. 27 is repeated for every several tens ms, preferably every intake stroke in each cylinder 16. However, each of steps S2701 to S2707, and S2713 in FIG. 27 is the same as each of steps S2501 to S2507, and S2517 in FIG. 25.

ECU 60 finds the first injection quantity Qb, the second injection quantity Qa and the third injection quantity Qe at steps S2701 to S2705 respectively. When a positive determination is made at step S2707, the fourth injection quantity Qpm (Qpm (pip) in FIG. 27) is calculated based upon the port pressure pip and the engine rotational speed at step S2709. On the other hand, when a negative determination is made at step S2707, the fourth injection quantity Qpm (Qpm (pii) in FIG. 27) is calculated based upon the compressor outlet pressure pii and the engine rotational speed at step S2711. At step S2713 the minimum injection quantity among the four fuel injection quantities is set as the execution fuel injection quantity Qf. As a result, in the same way as the explanation in the seventeenth embodiment, the fuel injection period is found and the injector 12 is controlled based upon this fuel injection period.

Since the fuel injection from the injector 12 is made using the minimum value of the four fuel injection quantities thus obtained, the effect similar to that described in the seventeenth embodiment is achieved. In addition to it, since the execution fuel injection quantity Qf is determined based upon the pressure in the intake passage downstream of the intake control valve 56 as described above, it is possible to more appropriately achieve the fuel injection control.

Next, a further different fuel injection control will be explained here in an internal combustion engine in a twentieth embodiment. An internal combustion engine system for a vehicle to which the twentieth embodiment is applied is generally the same as that in the nineteenth embodiment, and therefore, the explanation is omitted.

The fuel injection control in the twentieth embodiment is the same as the fuel injection control in the seventeenth embodiment or the like in a point of using the minimum injection quantity among the first injection quantity Qb, the second injection quantity Qa, the third injection quantity Qe and the fourth injection quantity Qpm of the four injection quantities as the execution fuel injection quantity Qf. However, a method of finding the fourth injection quantity Qpm in the twentieth embodiment is different from that in the seventeenth embodiment. Accordingly here, calculation of the fourth injection quantity Qpm in the twentieth embodiment will be first explained. A method of finding the fourth injection quantity Qpm in the twentieth embodiment corresponds to a combination of the method of finding the fourth injection quantity Qpm in each of the eighteenth and nineteenth embodiments. It should be noted that hereinafter, any one cylinder 16 will be explained and an explanation in regard to the other cylinder 16 may be omitted.

ECU 60, at the time of not performing the impulse charge, that is, when the operating state is not in the impulse charge operating region, the above basic injection quantity Qp is calculated, which is defined as the fourth injection quantity Qpm. In the twentieth embodiment, the basic injection quantity is shown in a code Qp' (pii).

On the other hand, in the middle of performing the impulse charge, ECU 60 first detects a port pressure pip downstream of the intake control valve 56 using the pressure sensor 58. However, this port pressure pip is preferably a pressure at the time of closing the intake valve 28. ECU 60 calculates an upper limit basic injection quantity Qp' (pip) corresponding to the fourth injection quantity Qpm in the nineteenth embodiment by retrieving data in advance found by an experiment and stored, or calculating it using a computing formula based upon the detected port pressure pip and the engine rotational speed. Further, ECU 60 estimates an increasing degree ΔT in the same way as the estimation of the increasing degree ΔT in the eighteenth embodiment to calculate the correction coefficient Rit as the second correction coefficient itself in the eighteenth embodiment. The fourth injection quantity Qpm is calculated by multiplying the above upper limit basic injection quantity Qp' (pip) by the correction coefficient Rit.

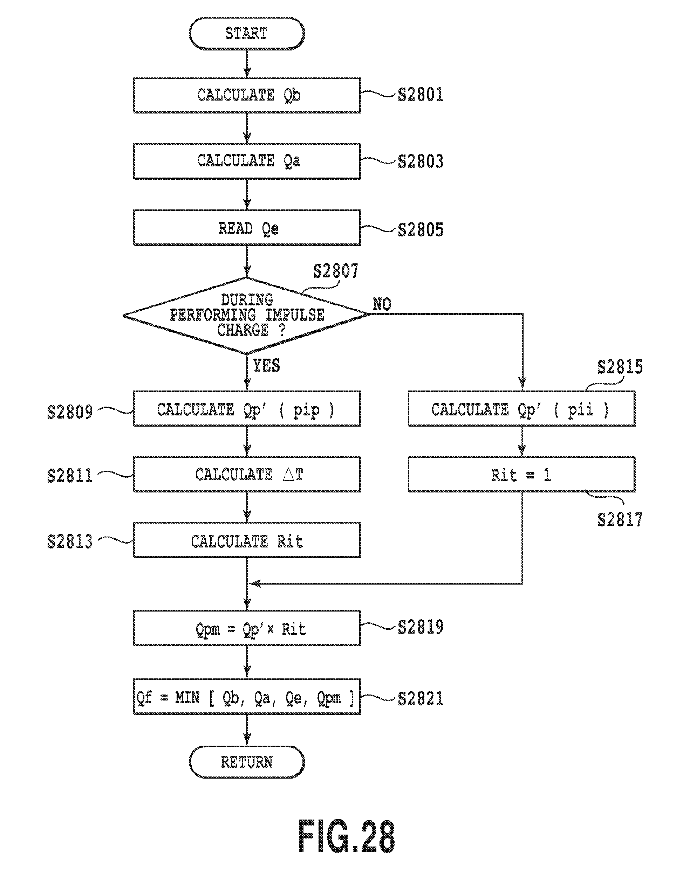

Here, a determination of the execution fuel injection quantity Qf in the twentieth embodiment will be explained with reference to a flow chart in FIG. 28. It should be noted that the flow chart in FIG. 28 is repeated for every several tens ms, preferably every intake stroke in each cylinder 16. However, each of steps S2801 to S2807, and S2821 in FIG. 28 is the same as each of steps S2501 to S2507, and S2517 in FIG. 25.

ECU 60 finds the first injection quantity Qb, the second injection quantity Qa and the third injection quantity Qe at steps S2801 to S2805 respectively. When a positive determination is made at step S2807, the upper limit basic injection quantity Qp' (pip) is calculated based upon the port pressure pip and the engine rotational speed at step S2809. At next step S2811 the increasing degree ΔT is estimated and calculated, and at next step S2813 the correction coefficient Rit is calculated.

On the other hand, when a negative determination is made at step S2807, the upper limit basic injection quantity Qp' (pii) is calculated based upon the compressor outlet pressure pii and the engine rotational speed at step S2815. At next step S2817, the correction coefficient Rit is set to "1".

When step S2813 or step S2817 is executed, the upper limit basic injection quantity Qp' (Qp'(pip) or Qp' (pii)) is multiplied by the correction coefficient Rit at step S2819 to calculate the four injection quantity Qpm. At step S2821 the minimum injection quantity among the four fuel injection quantities is set as the execution fuel injection quantity Qf. As a result, in the same way as the explanation in the seventeenth embodiment, the fuel injection period is found, and the injector 12 is controlled based upon this fuel injection period.

Since the fuel injection from the injector 12 is made using the minimum value of the four fuel injection quantities thus obtained, the effect similar to that described in the seventeenth embodiment is achieved. In addition to it, since the execution fuel injection quantity Qf is determined based upon the temperature or the pressure in the intake passage downstream of the intake control valve 56 as described above, it is possible to more appropriately achieve the fuel injection control.

Next, a twenty-first embodiment will be explained. In an internal combustion engine in the twenty-first embodiment, the intake control valve 56 is used not only for impulse charge but also when the operating state is in a specific operating region within a non-impulse charge operating region, the intake control valve 56 opens one time and closes one time during one intake stroke. In consequence, a fuel injection control in the twenty-first embodiment has a point which is different from the fuel injection control in the above other embodiment. Accordingly hereinafter, the twenty-first embodiment will be in detail explained.

An internal combustion engine system in the twenty-first embodiment is generally the same as the internal combustion engine system in the seventeenth embodiment, but differs in the arrangement location and the numbers of the intake control valves 56. In the internal combustion engine in the twenty-first embodiment, the intake control valve 56 is provided in each of the individual intake passages P3 as the internal combustion engine in the second embodiment. That is, since the internal combustion engine in the twenty-first embodiment has four cylinders as described above, the four intake control valves 56 are provided in this internal combustion engine. An operation or the like of each intake control valve 56 will be explained later. Since the valve operating mechanism of the intake valve 28 is not a variable valve operating mechanism, opening/closing timing of the intake valve 28 is basically the same regardless of an operating state. Specifically in each cylinder 16, the opening timing of the intake valve 28 is time when the piston 48 is generally at a top dead center (TDC), and the closing timing of the intake valve 28 is time when the piston 48 is in a range of 30° to 50° after a bottom dead center (BDC) . "When the piston 48 is in a range of 30° to 50° after a bottom dead center" means "when the crank angle is in a range of 30° to 50° after the crank angle corresponding when the piston is at a bottom dead center".

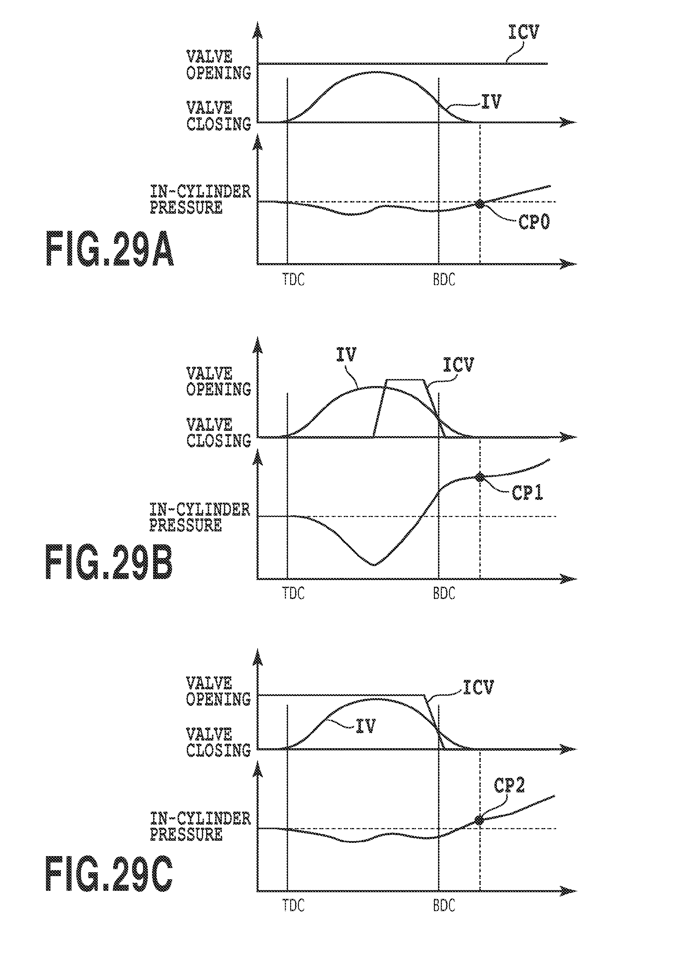

A map (not shown) having three regions for switching a control state of the intake control valve 56 is set based upon an experiment or the like, which is in advance stored in ROM of ECU 60. The three regions are composed of a first operating region as an operating region where the intake control valve 56 is controlled so as not to influence an air quantity aspired into the combustion chamber 14, a second operating region as the impulse charge operating region and a third operating region other than these operating regions, in which an engine rotational speed is relatively low and an engine load is also relatively low. Specifically the third operating region is an operating region where the engine rotation speed is low and intermediate speeds and the engine load is low and intermediate loads, and is a region adjacent to a low rotational side of the second operating region. FIGS. 29A to 29C are conceptual graphs each showing a relation between each opening of the intake valve 28 and the intake control valve 56 in accordance with an operating state during an intake stroke and an in-cylinder pressure among pressures downstream of the intake control valve 56. The graph in FIG. 29A shows a relation of them when the operating state is in the first operating region, the graph in FIG. 29B shows a relation of them when the operating state is in the second operating region, and the graph in FIG. 29C shows a relation of them when the operating state is in the third operating region. However, an opening curve of the intake control valve 56 is shown by a code "ICV" and an opening curve of the intake valve 28 is shown by a code "IV". It should be noted that three opening curves IV of the intake valve 28 in FIGS. 29A to 29C are all the same.

When the operating state is in the first operating region, the intake control valve 56 is constantly held in a opened state and the intake valve 28 only is operated to open/close (refer to FIG. 29A) . Therefore, when the intake valve 28 is being opened, air which has passed the intake passage 18 is aspired only due to a negative pressure generated in the cylinder 16 by a motion of the piston 46 from top dead center to bottom dead center. Therefore, as apparent from FIG. 29A, an in-cylinder pressure CPO at the time of closing the intake valve 28 when the operating state is in the first operating region is almost the same as a pressure in the intake port at the time of opening the intake valve 28.

When the operating state is in the second operating region, the intake control valve 56 is opened in the midway of the opening period of the intake valve 28, and thereafter, is closed. FIG. 29 B specifically shows a case where in the duration from a point after the intake valve 28 is opened in the vicinity of a top dead center to a point where the intake valve 28 is closed after a bottom dead center, the intake control valve 56 is opened in the order of 100° after a top dead center and is closed when the piston 48 is generally in a bottom dead center. Since the intake control valve 56 is thus operated based upon the opening/closing timing for impulse charge, the air is aspired into the cylinder 16 by using the intake pulsation effect at a maximum as described above. Therefore, the in-cylinder pressure CP1 at the time of closing the intake valve 28 when the operating state is in the second operating region is relatively higher than the pressure in the intake port at the time of opening the intake valve 28.

When the operating state is in the third operating region, the intake control valve 56 which is opened before opening the intake valve 28 and maintained in an opened state is closed when the piston 48 is generally in the vicinity of a bottom dead center (refer to FIG. 29C) . As a result, before closing the intake valve 28 after closing the intake control valve 56, the air taken into the cylinder 16 so far is blocked by the intake control valve 56 to be held downstream of the intake control valve 56. Accordingly, although the supercharge effect is lower than the impulse charge, much air can be aspired into the cylinder 16. Therefore, the in-cylinder pressure CP2 at the time of closing the intake valve 28 when the operating state is in the third operating region is higher than the pressure in the intake port at the time of opening the intake valve 28.

When the operating state is in the first operating region and the engine rotational speed is high, a flow speed of air flowing in the intake port 26 is maximized after the piston passes a bottom dead center due to an inertia force of the air stream from the intake passage into the cylinder 16. In contrast, since the intake valve 28 is opened/closed at the opening/closing timing as described above, a desired quantity of air is appropriately aspired into the cylinder 16, that is, the combustion chamber 14. Therefore, at this time the opening/closing operation of the intake control valve 56 as performed when the operating state is in the third operating region is not required.

A relation between the in-cylinder pressures CP0, CP1 and CP2 is, as apparent from FIGS. 29A to 29C, defined as "CP1 > CP2 > CP0". The intake air quantity achieved by thus controlling the intake control valve 56 so as to be associated with intake valve 28 is a quantity suitable for an operating state at each time. Even if the air quantity aspired into the cylinder 16 thus changes in accordance with an operating state, the fuel injection control to be explained hereinafter is performed here for appropriately generating engine torque corresponding to the operating state.

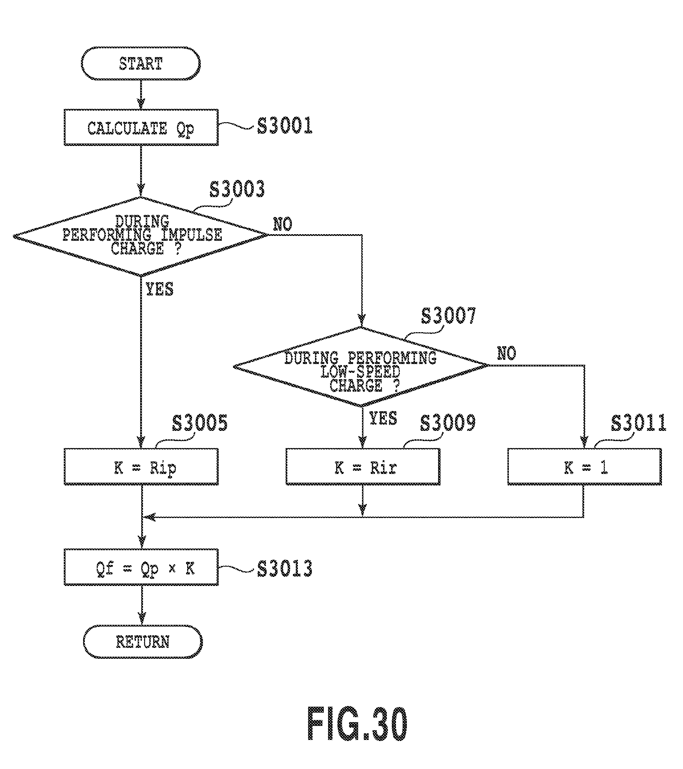

When the intake air quantity corresponding to the operating state is thus realized, it is preferable that fuel having a quantity corresponding thereto is, in the same way as the above-mentioned, injected into the combustion chamber 14 also form a viewpoint of exhaust emissions. Therefore, the fuel injection control in the twenty-first embodiment will be explained with a flow chart in FIG. 30. However, the flow chart in FIG. 30 shows a flow of determination of the execution fuel injection quantity Qf in the twenty-first embodiment, and the routine is repeated for every several tens ms, preferably is repeated for every intake stroke in each cylinder 16. It should be noted that here, the aspiration of the air as described above when the operating state is in the second operating region is called impulse charge, and on the other hand, the aspiration of the air as described above when the operating state is in the first operating region is called non-supercharge and aspiration of the air as described above when the operating state is in the third operating region is called low rotational charge. Therefore, the third operating region is called a low rotational charge operating region. However, even if the operating state is in either one of the operating regions, the supercharge by the turbocharger 80 can be performed.

ECU 60, at step S3001, calculates the basic injection quantity Qp explained in the seventeenth embodiment in the same way as the above-mentioned. At next step S3003, it is determined whether or not the impulse charge is being performed. The determination, here is made on whether or not the operating state is in the second operating region as the impulse charge operating region. When a positive determination is made at step S3003, at next step S3005, as a correction coefficient K the correction coefficient Rip found in the seventeenth embodiment is calculated in the same way.

On the other hand, when a negative determination is made at step S3003, at next step S3007 it is determined whether or not the low rotational charge is being performed. For this determination, a determination is made on whether or not the operating state is in the third operating region. When a positive determination is made at step S3007, at next step S3009, as the correction coefficient K, a correction coefficient Rir is calculated by retrieving a map in advance found by an experiment and stored in ROM, based upon the engine rotation speed at that time. In contrast, when a negative determination is made at step S3007, at step S3011 the correction coefficient K is set to "1".

When steps S3005, S3009 or S3011 is executed, at next step S3013 the execution fuel injection quantity Qf is calculated by multiplying the basic injection quantity Qp calculated at step S3001 by the correction coefficient K set immediately before it. The injector 12 is controlled so as to supply the fuel corresponding to the calculated execution fuel injection quantity Qf into the combustion chamber 14.

When the positive determination is made at step S3003, the fourth injection quantity Qpm in each of the eighteenth to twentieth embodiments may be calculated as the execution fuel injection quantity Qf. Further, even in the twenty-first embodiment, the first injection quantity Qb, the second injection quantity Qa and the third injection quantity Qe are found in the same way as in the seventeenth embodiment, which are compared with the fuel injection quantity found at step S3013 or the fourth injection quantity Qpm in each of the eighteenth to twentieth embodiments, thereby making it possible to define the minimum value among them as the execution fuel injection quantity.

In this way, the air having a quantity suitable for an operating state is aspired into the cylinder 16, and the fuel having a quantity corresponding to the air quantity is injected into the cylinder 16, that is, the combustion chamber 14. Therefore, the requirement torque can be appropriately realized without deterioration of exhaust emissions.

In this way, in the seventeenth to twenty-first embodiments, at the time of performing impulse charge, a fuel injection quantity is directly determined based upon an operating state of the intake control valve 56 or the like, while performing the fuel injection control. In addition, in the twenty-first embodiment, at the time of performing the low rotational charge, a fuel injection quantity is directly determined in consideration of an increasing quantity of air based upon an operating state of the intake control valve 56 or the like, while performing the fuel injection control. However, the air quantity aspired into the cylinder 16 may be estimated based upon an operating state of the intake control valve 56 or the like and thereafter, the fuel injection control to the combustion chamber 14 may be performed based upon this air quantity.

It should be noted that the present invention is not limited to the various kinds of the embodiments and modifications as described above, but allows a different embodiment by any combination of the embodiments. The present invention is explained in detail on some degree in the various kinds of the embodiments, but it should be understood that in the present invention, various changes or modifications are possible without departure from the spirit or the scope of the invention as defined in claims. That is, the present invention includes the scope of claims, the scope of its equivalents and modifications and changes included in the spirit.

## Claims

1. An internal combustion engine comprising:
intake passages provided to a plurality of cylinders, respectively, each of the intake passages having a passage length contributing to generation of an air column vibration, wherein an intake control valve usable for impulse charge is provided individually or commonly in these intake passages and an opening/closing timing of the intake control valve is set to correspond to the passage length of each of the intake passages.

2. An internal combustion engine according to claim 1, wherein the passage length of each of the intake passages is a length from a position of an intake valve for each of the cylinders to a downstream end of a surge tank.

3. An internal combustion engine according to claim 2, wherein a cross sectional area of any location in the intake passage is substantially constant.

4. An internal combustion engine according to claim 2 or 3, wherein
each of the intake passages includes a common intake passage in common with the other intake passage, and an individual intake passage in regard to a single cylinder corresponding thereto, the plurality of cylinders are divided into one or more groups, and the single common intake passage in regard to one group communicates with the surge tank.

5. An internal combustion engine according to claim 4, wherein the plurality of cylinders are divided into groups, each of which consists of cylinders having discontinuous timings of the intake stroke.

6. An internal combustion engine according to claim 4, wherein the plurality of cylinders are divided into groups, each of which consists of adjacent cylinders.

7. An internal combustion engine according to any of claims 4 to 6,
wherein the intake control valve is provided in the common intake passage.

8. An internal combustion engine according to any of claims 4 to 6,
wherein the intake control valve is provided in the individual intake passage.

9. An internal combustion engine according to claim 8, wherein the intake control valve is provided in an intake port.

10. An internal combustion engine according to any of claims 4 to 6,
wherein the intake control valve is provided in a boundary portion between the common intake passage and the individual intake passage.

11. An internal combustion engine according to claim 10, wherein the intake control valve is provided in a branch portion of the boundary portion.

12. An internal combustion engine according to claim 11, wherein the intake control valve is configured in such a manner that when the intake passage is opened to one cylinder, the intake passage to the other cylinder is blocked.

13. An internal combustion engine according to claim 10, wherein the intake control valve is provided in an intermediate branch passage of the boundary portion.

14. An internal combustion engine according to any of claims 4 to 13,
wherein the individual intake passage is formed in a cylinder head and a downstream end of the common intake passage is formed in the cylinder head.

15. An internal combustion engine according to any of claims 1 to 14,
wherein the plurality of intake control valves are provided, wherein the intake control valve provided in the intake passage to the cylinder which is during an intake stroke is controlled to be opened and closed and the other intake control valve provided in the intake passage to the cylinder which is not during the intake stroke is controlled to be closed.

16. An internal combustion engine according to any of claims 1 to 14,
comprising:
an intake control valve controller for controlling the intake control valve in accordance with an operating state, wherein when the operating state is in an impulse charge operating region, the intake control valve controller controls the intake control valve to open in the midway of the intake stroke of the cylinder in the downstream side and close thereafter.

17. An internal combustion engine according to claim 16, wherein when the operating state is in a low-speed charge operating region, the intake control valve controller controls the intake control valve to open before start of the intake stroke in the cylinder in the downstream side and thereafter, close before an intake valve of the corresponding cylinder closes.

18. An internal combustion engine according to claim 17, wherein when the operating state is in the low-speed charge operating region, the intake control valve controller controls the intake control valve to close when a piston is in the vicinity of a bottom dead center.

19. An internal combustion engine according to any of claims 16 to 18,
wherein the plurality of intake control valves are provided, wherein the intake control valve controller controls the intake control valve provided in the intake passage to the cylinder which is during the intake stroke to be opened and closed and the other intake control valve provided in the intake passage to the cylinder which is not during the intake stroke to be closed.

20. An internal combustion engine according to any of claims 16 to 19, comprising:
air quantity estimating means for, when the intake control valve is controlled by the intake control valve controller, estimating an air quantity aspired into the cylinder downstream of the intake control valve during the intake stroke, based upon at least one of an operating state of the intake control valve, a temperature in the intake passage downstream of the intake control valve, a pressure in the intake passage downstream of the intake control valve and a configuration characteristic of the intake passage having a passage length contributing to generation of the air column vibration and provided with the intake control valve therein.

21. An internal combustion engine according to claim 20, comprising:
a fuel injection controller for controlling fuel injection into the cylinder based upon the air quantity aspired into the cylinder during the intake stroke and estimated by the air quantity estimating means.

22. An internal combustion engine according to any of claims 16 to 19,
comprising:
a fuel injection controller for, when the intake control valve is controlled by the intake control valve controller, controlling fuel injection in such a manner as to inject into the cylinder fuel having a quantity corresponding to an air quantity aspired into the cylinder downstream of the intake control valve during the intake stroke, based upon at least one of an operating state of the intake control valve, a temperature in the intake passage downstream of the intake control valve, a pressure in the intake passage downstream of the intake control valve and a configuration characteristic of the intake passage having a passage length contributing to generation of the air column vibration and provided with the intake control valve therein.

23. An internal combustion engine according to any of claims 20 to 22,
wherein the operating state of the intake control valve includes at least one of presence/absence of an operation of the intake control valve, an opening timing thereof for impulse charge, a closing timing thereof for impulse charge, an opening period thereof for impulse charge, a closing timing thereof for low-speed charge, and an operation speed thereof.

24. An internal combustion engine according to any of claims 20 to 23,
wherein the temperature in the intake passage downstream of the intake control valve is a temperature at closing timing of the intake valve downstream of the intake control valve.

25. An internal combustion engine according to any of claims 20 to 24,
wherein the pressure in the intake passage downstream of the intake control valve is a pressure at closing timing of the intake valve downstream of the intake control valve.
